(19) Europäisches Patentamt
European Patent Office
Office européen des brevets

(11) EP 2 286 477 B1

(12) EUROPÄISCHE PATENTSCHRIFT

(45) Veröffentlichungstag und Bekanntmachung des Hinweises auf die Patenterteilung:
**29.02.2012 Patentblatt 2012/09**

(21) Anmeldenummer: **09765608.6**

(22) Anmeldetag: **16.06.2009**

(51) Int Cl.:
***H01M 4/02*** *(2006.01)* ***H01M 4/86*** *(2006.01)*
***H01M 4/90*** *(2006.01)*

(86) Internationale Anmeldenummer:
**PCT/EP2009/004354**

(87) Internationale Veröffentlichungsnummer:
**WO 2009/153028 (23.12.2009 Gazette 2009/52)**

(54) **GASDIFFUSIONSELEKTRODEN MIT FUNKTIONALISIERTEN NANOPARTIKELN**

GAS DIFFUSION ELECTRODES COMPRISING FUNCTIONALISED NANOPARTICLES

ÉLECTRODE À DIFFUSION GAZEUSE AVEC NANOPARTICULES FONCTIONNALISÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **16.06.2008 DE 102008028552**

(43) Veröffentlichungstag der Anmeldung:
**23.02.2011 Patentblatt 2011/08**

(73) Patentinhaber:
- **Elcomax Membranes Gmbh**
  **81737 München (DE)**
- **LANXESS Deutschland GmbH**
  **51369 Leverkusen (DE)**
- **Rhein Chemie Rheinau GmbH**
  **68219 Mannheim (DE)**

(72) Erfinder:
- **ZISER, Torsten**
  **69469 Weinheim (DE)**
- **FRÜH, Thomas**
  **42105 Wuppertal (DE)**
- **BAYER, Domnik**
  **69121 Heidelberg (DE)**
- **OBRECHT, Werner**
  **47447 Moers (DE)**
- **MELZNER, Dieter**
  **37075 Göttingen (DE)**
- **REICHE, Annette**
  **37079 Göttingen (DE)**
- **GRONWALD, Oliver**
  **60316 Frankfurt (DE)**

(74) Vertreter: **Grättinger Möhring von Poschinger Patentanwälte Partnerschaft**
**Wittelsbacherstrasse 2b**
**82319 Starnberg (DE)**

(56) Entgegenhaltungen:
**WO-A1-2006/005466 WO-A1-2008/107192**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 286 477 B1

Printed by Jouve, 75001 PARIS (FR)

## Beschreibung

Die vorliegende Erfindung betrifft eine Gasdiffusionselektrode für Polymerelektrolyt-Brennstoffzellen mit einer Arbeitstemperatur bis 250 °C mit mehreren gasdurchlässigen, elektrisch leitfähigen Schichten, die mindestens eine Gasdiffusionsschicht und eine Katalysatorschicht umfassen, wobei die Katalysatorschicht ionogene Gruppen enthaltende Teilchen eines mittleren Teilchendurchmessers im Nanometerbereich enthält, sowie die Herstellung der Gasdiffusionselektrode und deren Verwendung in Hochtemperatur-Polymerelektrolytmembran-Brennstoffzellen.

Gasdiffusionselektroden zur Verwendung in Polymerelektrolyt-Brennstoffzellen sind Komponenten einer Membran-Elektroden-Einheit (MEE). Diese enthält mindestens zwei Gasdiffusionselektroden, eine Anode und eine Kathode, welche eine protonenleitende Elektrolytmembran sandwichartig einschließen und nach außen hin durch Bipolarplatten kontaktiert werden (vgl. Figur 1).

Gasdiffusionselektroden für Polymerelektrolyt-Brennstoffzellen sind mehrschichtig aufgebaut und umfassen mindestens eine Gasdiffusionsschicht und eine Katalysatorschicht, wobei letztere die Polymerelektrolytmembran kontaktiert.

Die Gasdiffusionsschicht besteht aus einem elektrisch leitenden Papier oder Vlies, üblicherweise auf der Basis von graphitisierten Fasern. Sie verbindet Bipolarplatten und Katalysatorschicht elektrisch, leitet die Reaktionsgase aus den Bipolarplatten in die Katalysatorschicht und transportiert das gebildete Produktwasser aus der Katalysatorschicht in die Bipolarplatten.

Die Katalysatorschichten bestehen aus einer porösen Schicht von nanoskaligen Partikeln eines elektrisch leitfähigen Trägermaterials, beispielsweise Rußpartikeln, auf denen ein Elektrokatalysator dispergiert ist.

Die Aufgaben der Katalysatorschicht umfassen den Transport der Reaktanden Wasserstoff und Sauerstoff sowie der Protonen zum Elektrokatalysator, die Umsetzung der Reaktanden, den Abtransport des Produktwassers in die Gasdiffusionslage und die

Ab- und Zuleitung der Elektronen. Zur Erzielung einer hohen Leistung der MEE müssen die Komponenten der Katalysatorschicht so in der Elektrodenschicht verteilt sein, dass:

- Der Zugang der Reaktionsgase zum Elektrokatalysator und Abtransport des Produktwassers gewährleistet sind,
- dass eine elektronenleitende Verbindung vom Elektrokatalysator zur Gasdiffusionslage gegeben ist und
- dass eine protonenleitende Verbindung zwischen Elektrolytmembran und Elektrokatalysator besteht.

Auf Grund der unterschiedlichen Reaktionen, die im Anoden- und Kathodenraum einer MEE stattfinden, sind die beiden Katalysatorschichten einer MEE üblicherweise nicht identisch, sondern in Zusammensetzung und Aufbau auf die jeweiligen Reaktionsbedingungen an Anode und Kathode angepasst.

Zur Gewährleistung der protonenleitenden Verbindung zwischen Elektrolytmembran und Elektrokatalysator enthält die Katalysatorschicht einen Protonenleiter. US 4,876,115 beschreibt die Verwendung von Nafion® oder Rutheniumdioxid als protonenleitendes Material, welches die Oberfläche der elektrisch leitfähigen Kohlenstoffpartikel als Träger des Katalysatormaterials kontaktiert und den durch die Zellreaktion produzierten Protonen eine protonenleitende Verbindung mit der Polymerelektrolytmembran erlaubt.

Zur Gewährleistung des Zugangs der Reaktionsgase zum Elektrokatalysator und des Abtransportes des Produktwassers ist die Katalysatorschicht porös aufgebaut. Die Rußpartikel haben üblicherweise einen Durchmesser 10-40 nm. Die Katalysatorpartikel haben üblicherweise einen Durchmesser von 3-10 nm. Zusätzlich enthält die Katalysatorschicht üblicherweise Polytetrafluorethylen (PTFE). JP 1994-84797 beschreibt eine mehrschichtige Elektrode, in der durch Einarbeitung von Polytetrafluorethen (PTFE) in die poröse Elektrodenstruktur hydrophobe Gaskanäle geschaffen werden, welche die Versorgung der Katalysezentren verbessern. Gleichzeitig erhöht sich die mechanische Integrität und Stabilität des Elektrodenkörpers, was zu einer verbesserten Langzeitstabilität unter den gegebenen Betriebsbedingungen führt. PTFE macht die Katalysatorschicht hydrophob und fungiert als Binder. Ein Nachteil besteht in der teilweisen Inaktivierung der Katalysezentren durch Bedeckung mit PTFE.

Für den Einsatz von Polymerelektrolytbrennstoffzellen im Betriebstemperaturbereich oberhalb 100°C ist Nafion® als protonenleitendes Material in Gasdiffusionselektroden nicht geeignet, da es im Dauerbetrieb unter diesen Betriebsbedingungen nicht stabil ist. Der Betrieb von Polymerelektrolyt-Brennstoffzellen bei Temperaturen bis 250 °C ist aufgrund der verbesserten Elektrodenkinetik verbunden mit einer erhöhten Toleranz des Anodenkatalysators gegenüber Kohlenmonoxid und anderen Katalysatorgiften wünschenswert. Dadurch kann der technische Aufwand für die Gasreinigung bei der Verwendung von Wasserstoff aus Reformatgas deutlich reduziert werden. Weiterhin kann die Abwärme der Zelle aufgrund ihres höheren Temperaturniveaus effektiver genutzt werden.

Für den Betrieb von Polymerelektrolytbrennstoffzellen bei Betriebstemperaturen oberhalb von 100 °C finden üblicherweise aus basischen Polymeren (z.B. aus Polyazolen) bestehende Membranen Verwendung, die durch Dotierung mit Mineralsäuren Protonenleitfähigkeit erlangen. US 5,525,436 beschreibt die Herstellung von mit Phosphorsäure dotierten Membranen aus Polybenzimidazol und ihre Verwendung in Hochtemperaturbrennstoffzellen. Die üblicherweise

ebenfalls für die Elektroden als Elektrolyt verwendete Phosphorsäure besitzt den Nachteil, dass sie in flüssiger Form vorliegt und die Poren der Katalysatorschicht ausfüllt. Der Zugang zum Elektrokatalysator erfordert einen Transport der Betriebsgase durch die Phosphorsäure. Dieser ist auf Grund der geringen Sauerstofflöslichkeit und des niedrigen Diffusionskoeffizienten für Sauerstoff erschwert, was die kathodenseitige Elektrodenreaktion hemmt und somit die Leistungsdichte dieser Hochtemperatur-Polymerelektrolytmembran-Brennstoffzellen im Vergleich zum Niedertemperatursystem mit Nafion® erniedrigt.

Phosphorsäure ist in der Elektrode durch Kapillarkräfte nur teilweise gebunden und somit innerhalb der Membran-Elektroden-Einheit mobil, was Ursache von Degradationserscheinungen sein kann. Demzufolge müssen sich zur Steigerung der Leistungsfähigkeit von Hochtemperatur-Polymerelektrolyt-Brennstoffzellen die Entwicklungsarbeiten auf den Einsatz eines besser geeigneten Protonenleiters für die Katalysatorschicht konzentrieren. Der Gehalt an flüssiger Phosphorsäure sollte reduziert werden, bzw. Phosphorsäure sollte durch einen festen Protonenleiter ersetzt werden, wobei gleichzeitig ein guter Kontakt zwischen den katalytischen Zentren auf dem Trägermaterial und dem Elektrolyten und der Gasphase bei gleichzeitiger Etablierung eines mechanisch belastbaren Verbundes aus den Elektrodenbestandteilen gewährleistet sein soll. Ein weiterer Aspekt besteht in der Verbesserung der Verteilung von Phosphorsäure in der Katalysatorschicht, was durch eine verbesserte Benetzbarkeit der Katalysatorschicht ermöglicht werden soll.

Die Aufgaben der Katalysatorschicht lassen sich besonders gut in dünnen Schichten < 50 Micrometer realisieren, in der alle Komponenten der Katalysatorschicht, der Elektrokatalysator auf den Russpartikeln, das protonenleitende Material und der Binder in Form von Nanopartikeln vorliegen. Die Herstellung dünner Katalysatorschichten erfordert die Anwendung von Ink-Jet-ähnlichen Druck-prozessen, die besondere Materialanforderungen stellen. Die Komponenten der Katalysatortinte müssen eine stabile Suspension bilden und über Partikel im Nanomaßstab mit möglichst homogener Partikelgrößenverteilung verfügen.

WO 01/18894 A2 beschreibt die Herstellung und Verwendung von Gasdiffusionselektroden für den Betrieb bei Temperaturen von oberhalb 100 °C durch die Einarbeitung von basischem Polybenzimidazol in die Elektrodenstruktur zur optimierten Bindung von Phosphorsäure als Elektrolyt. Dazu wird die Paste oder Suspension eines Trägermaterials mit Katalysator in einer Lösung von Polybenzimidazol (PBI) in Dimethylacetamid (DMAc) auf eine hydrophobe Gasdiffusionslage gebracht und durch Entzug des Lösungsmittels eine stabile Elektrodenschicht erzeugt. Zur Gewährleistung der Protonenleitung zwischen den katalytischen Zentren und der Polymerelektrolytmembran wird die Elektrodenschicht anschließend mit einer Säure (z.B. Phosphorsäure) als Dotierungsmittel imprägniert, wobei Polybenzimidazol als basisches Polymer das Dotierungsmittel immobilisiert und gleichzeitig eine Binderfunktion auf den Elektrodenverbund ausübt. Die mit Phosphorsäure imprägnierten Elektroden und die mit Phosphorsäure dotierten Polybenzimidazol-Polymerelektrolytmembranen werden zu Membran-Elektroden-Einheiten heißverpresst. Nachteilig ist, dass durch diese Herstellungsmethode dichte Schichten von Polybenzimidazol auf dem elektrokatalytisch aktiven Trägermaterial erzeugt werden, was die Gasdurchlässigkeit in der Elektrodenschicht und somit die Zugänglichkeit der Katalysatorzentren für die Brenngase stark herabsetzt.

WO 2006/005466 A1 löst dieses Problem, indem nur ein Teil der Partikel des elektrisch leitfähigen Trägermaterials mit porösen, protonenleitenden Polymeren (z.B. Polybenzimidazolen) beladen wird und somit die Zugänglichkeit des Katalysators für die Reaktionsgase stark verbessert wird. Durch die partielle Beladung ist die Binderfunktion herabgesetzt und deshalb ist die Zugabe von bindenden Additiven wie beispielsweise PTFE erforderlich. Die Folge ist, dass neben der zuvor ausgeführten teilweisen Inaktivierung der Katalysezentren durch Bedeckung mit PTFE der hydrophobe Effekt des PTFE die Benetzbarkeit der Elektrode für das hydrophile Dotierungsmittel Phosphorsäure und somit die Effizienz der Protonenleitfähigkeit in der Elektrode begrenzt.

US 2007/0166600 A1 offenbart Elektroden mit amorphen protonenleitenden Feststoffen bestehend aus Oxiden wie $B_2O_3$, $ZrO_2$, $SiO_2$, $WO_3$, $P_2O_5$, die in HochtemperaturBrennstoffzellen bis 150 °C einsetzbar sind. Die Elektrolyte werden in vermahlener Form in die Katalysatorschicht eingebracht. Sie liegen bedingt durch das Herstellungsverfahren in einer breiten Partikelgrößenverteilung vor. Die durch den Herstellungsprozeß bedingte Größe der protonenleitenden Partikel vermindert eine effektive Kontaktierung der Katalysatorzentren und beschränkt die Leistungsdichte des Systems.

Darüberhinaus erschwert die breite Größenverteilung der Partikel die Verarbeitung von Elektrodentinten mittels Druckverfahren, wie Inkjet-Verfahren, so dass die Herstellung von ausreichend dünnen Elektrodenschichten im Produktionsverfahren technisch nicht realisiert werden kann.

Keine der zuvor aufgeführten technischen Lösungsansätze für den Bereich der Hochtemperatur-Polymerelektrolytmembran-Elektroden-Einheiten erlaubt die Herstellung eines Membran-Elektroden-Verbundes im Sinne einer nanodispersen Verteilung aller Komponenten der Katalysatorschicht mit optimal gebundenem Katalysatorträgermaterial bei gleichzeitig verbesserter Leistungsdichte durch effektive Kontaktierung der aktiven Katalysatorzentren mit dem Elektrolyten und mit der Gasphase für die ungehinderte Zuführung der Reaktionsgase, um die Gasdurchlässigkeit der Elektrokatalysatorschicht und ihre Benetzbarkeit für Phosphorsäure zu verbessern.

Die Aufgabe der vorliegenden Erfindung besteht darin, Gasdiffusionselektroden für Hochtemperatur-Polymerelektrolyt-Brennstoffzellen mit einer verbesserten Leistungsdichte und Langzeitstabilität bereitzustellen, bei der die Katalysatorschicht eine gute Haftung und protonenleitende Anbindung auf einer Gasdiffusionsschicht und/oder einer Polymerelektrolytmembran zeigt und eine dauerhaft hohe Stabilität bei Betriebsbedingungen oberhalb 100 °C aufweist. Weitere Aufgaben der Erfindung bestehen darin, Verfahren zur effektiven Herstellung derartiger Gasdiffusionselektroden und Brennstoffzellen für Betriebstemperaturen bis 200 °C oder sogar bis 250°C unter Verwendung dieser Gasdiffusionselektroden bereitzustellen.

Diese Aufgabe wird durch Bereitstellen der in den Ansprüchen gekennzeichneten Ausführungsformen gelöst. Insbesondere wird gemäß der vorliegenden Erfindung eine Gasdiffusionselektrode für Polymerelektrolyt-Brennstoffzellen mit einer Arbeitstemperatur bis 250 °C bereitgestellt, die mehrere gasdurchlässige, elektrisch leitfähige Schichten aufweist, die mindestens eine Gasdiffusionsschicht und eine Katalysatorschicht umfassen, wobei die Katalysatorschicht ionogene Gruppen enthaltende Teilchen eines mittleren Teilchendurchmessers im Nanometerbereich enthält

Gemäß einer bevorzugten Ausführungsform bilden zwei erfindungsgemäße Gasdiffusionselektroden, die mindestens eine Gasdiffusionsschicht und eine Katalysatorschicht umfassen, mit einer zwischen den Gasdiffusionselektroden sandwichartig angeordneten Polymermembran eine Membran-Elektroden-Einheit, wie in Figur 1 gezeigt. Die Polymermembran umfaßt vorzugsweise basische Polymere auf Polyazolbasis, wie Polybenzimidazol, und ein Dotierungsmittel ausgewählt aus der Gruppe der Sulfonsäuren, Schwefelsäuren, Phosphorsäuren, Phosphonsäuren und/oder deren organische Derivate. Die Katalysatorschicht enthält den Elektrokatalysator auf dem Trägermaterial und mindestens die ionogene Gruppen enthaltenden Teilchen mit einem mittleren Teilchendurchmesser im Nanometerbereich vorzugsweise in einer Konzentration von weniger als 50%, besonders bevorzugt weniger als 40 %, und am meisten bevorzugt in einer Konzentration von 0,5 bis 30%, bezogen auf die Gesamtmasse von Trägermaterial und Elektrokatalysator.

Die Gasdiffusionselektrode gemäß der vorliegenden Erfindung mit mehreren gasdurchlässigen, elektrisch leitfähigen Schichten kann beispielsweise eine Gasdiffusionsschicht und mehrere Katalysatorschichten mit unterschiedlicher Zusammensetzung umfassen.

Die Gasdiffusionsschicht unterliegt keiner besonderen Beschränkung, es ist jedoch bevorzugt, dass die Gasdiffusionsschicht Kohlenstoff als Hauptbestandteil umfaßt. Es ist besonders bevorzugt, dass die Gasdiffusionsschicht aus Kohlenstoff besteht.

Der Aufbau der Gasdiffusionsschicht unterliegt keiner besonderen Beschränkung, es ist jedoch bevorzugt, dass die Gasdiffusionsschicht die Form eines Papiers, Vlieses, Gitters, Gewirks und/oder Gewebes aufweist.

Die Katalysatorschicht unterliegt grundsätzlich keiner wesentlichen Beschränkung, solange sie ionogene Gruppen enthaltende Teilchen eines mittleren Teilchendurchmessers im Nanometerbereich enthält. Die erfindungsgemäße Gasdiffusionselektrode weist vorzugsweise mindestens eine Katalysatorschicht auf, die ionogene Gruppen enthaltende Teilchen in Mengen von beispielsweise 0,2 bis 50 Gew.-%, besonders bevorzugt 0,5 bis 10 Gew.-%, bezogen auf die Gesamtmasse des elektrisch leitfähigen Trägermaterials und des Elektrokatalysators, enthält.

Es ist jedoch bevorzugt, dass die Katalysatorschicht ein elektrisch leitfähiges Trägermaterial enthält und/oder wenigstens ein Teil der Partikel eines elektrisch leitfähigen Trägermaterials der Katalysatorschicht einen Elektrokatalysator enthält.

Das elektrisch leitfähige Trägermaterial der Katalysatorschicht ist vorzugsweise aus der Gruppe der Metalle, Metalloxide, Metallcarbide, Kohlenstoffe oder Gemischen daraus ausgewählt.

Die Kohlenstoffe für das elektrisch leitfähige Trägermaterial der Katalysatorschicht unterliegen keiner besonderen Beschränkung, es ist jedoch bevorzugt, dass Ruß unter den Kohlenstoffen ausgewählt wird.

Der vorstehende beschriebene Elektrokatalysator ist vorzugsweise aus der Gruppe von Metallen und Metalllegierungen ausgewählt, wobei Metalle aus der 6. und/oder 8. Nebengruppe im Periodensystem der Elemente besonders bevorzugt sind.

Die am meisten bevorzugten Metalle aus der 6. und/oder 8. Nebengruppe im Periodensystem der Elemente sind die Metalle Platin und/oder Ruthenium.

Unter ionogene Gruppen enthaltenden Teilchen werden gemäß der vorliegenden Erfindung insbesondere oligomere und/oder polymere Teilchen verstanden, welche eine feste Phasengrenze mit der umgebenden Matrix der Katalysatorschicht aufweisen, jedoch nicht notwendigerweise aufweisen müssen. Geeignete ionogene Gruppen enthaltende Teilchen sind vor allem organische Teilchen, die hauptsächlich aus einem oder mehreren organischen Polymer(en) und/oder Oligomer(en) aufgebaut sind. Die für die ionogene Gruppen enthaltenden, organischen Teilchen geeigneten Polymere oder Oligomere unterliegen grundsätzlich keiner wesentlichen Beschränkung. Es ist jedoch bevorzugt, daß die ionogene Gruppen enthaltenden Teilchen hauptsächlich aus einem kautschukartigen Polymer oder Oligomer oder einem nicht-kautschukartigen Polymer oder Oligomer, vorzugsweise einem thermoplastischen Polymer oder Oligomer, aufgebaut sind. Die ionogene Gruppen enthaltenden Teilchen können oligomerer und/oder polymerer Natur sein.

Die ionogene Gruppen enthaltenden Teilchen können beispielsweise hauptsächlich aus Basismonomeren mit mindestens einer polymerisierbaren oder copolymerisierbaren Gruppe, vorzugsweise mindestens zwei und besonders bevorzugt zwei bis vier polymerisierbaren oder copolymerisierbaren Gruppen, insbesondere C=C-Doppelbindungen, aufgebaut werden.

Geeignete Basismonomere, die vorzugsweise eine bis vier polymerisierbare oder copolymerisierbare Gruppe(n) aufweisen, sind beispielsweise Butadien, Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien, doppelbindungshaltige Carbonsäuren, wie Acrylsäure, Methacrylsäure, Maleinsäure oder Itaconsäure, doppelbindungshaltige Sulfonsäuren, doppelbindungshaltige Phosphonsäuren, doppelbindungshaltige Hydroxyverbindungen, wie Hydroxyethylmethacrylat, Hydroxyethylacrylat oder Hydroxybutylmethacrylat, Amin-funktionalisierte (Meth)acrylate, Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid, 2,4-Toluylenbis(maleinimid) und/oder Triallyltrimellitat. Insbesondere wenn eine effiziente Quervernetzung erwünscht ist, werden Basismonomere mit zwei bis vier polymerisierbaren oder copolymerisierbaren Gruppen ausgewählt. Ferner können die ionogene Gruppen enthaltenden Teilchen hauptsächlich aus Acrylaten und/oder Methacrylaten von vorzugsweise mehrwertigen, besonders bevorzugt zwei- bis vierwertigen Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit oder Sorbit mit ungesättigten Polyestern aus aliphatischen Di- und Polyolen, und Maleinsäure, Fumarsäure und/oder Itaconsäure oder Gemischen davon aufgebaut werden.

Gemäß einer bevorzugten Ausführungsform weisen die ionogene Gruppen enthaltenden Teilchen an der Oberfläche oder in dem gesamten Teilchen ionogene Gruppen, vorzugsweise kovalent gebundene Säuregruppen, auf. Ferner können auch funktionelle Gruppen verwendet werden, die nach einer chemischen Umsetzung, beispielsweise einer Entschützungsreaktion, einer Hydrolyse, einer Additionsreaktion oder einer Substitutionsreaktion, in ionogene Gruppen, vorzugsweise Säuregruppen, umgewandelt werden können.

Die ionogenen Gruppen können vor allem an der Oberfläche der Teilchen durch chemische Umsetzung von Reagentien, die insbesondere mit C=C-Doppelbindungen reaktiv sind, mit an der Oberfläche eines vernetzten bzw. vorvernetzten Polymer- oder Oligomerteilchens vorhandenen reaktiven Gruppen eingeführt werden. Reagentien, die mit an der Oberfläche eines vernetzten bzw. vorvernetzten Teilchens vorhandenen reaktiven Gruppen, insbesondere C=C-Doppelbindungen, umgesetzt werden können, sind beispielsweise Aldehyde, Hydroxyverbindungen, Carboxylverbindungen, Nitrilverbindungen, Schwefelverbindungen, wie Verbindungen mit Mercapto-, Dithiocarbamat-, Polysulfid-, Xanthogenat-, Thiobenzthiazol- und/oder Dithiophosphonsäuregruppen, ungesättigte Carbonsäuren oder Dicarbonsäuren, ungesättigte Sulfonsäuren, ungesättigte Phosphonsäuren, N,N'-m-Phenylendiamin, Acrylsäure, Methacrylsäure, Hydroxyethylmethacrylat, Hydroxyethylacrylat, Hydroxybutylmethacrylat, Acrylamid, Methacrylamid, Amin-funktionalisierte (Meth)acrylate, wie Acrylnitril, Acrolein, N-Vinyl-2-pyrrolidon, N-Allyl-Harnstoff und N-Allyl-Thioharnstoff, und Derivate und Gemische davon.

Vorzugsweise sind die ionogene Gruppen enthaltenden Teilchen an der Oberfläche oder in dem gesamten Teilchen durch ionogene Gruppen, besonders bevorzugt durch kovalent gebundene Säuregruppen, beispielsweise Säuregruppen von ein- oder mehrwertigen Säuren, funktionalisiert, wobei Säuregruppen von mehrwertigen Säuren besonders bevorzugt sind. Die an der Oberfläche oder in dem gesamten Teilchen kovalent gebundenen Säuregruppen sind vorzugsweise Carbonsäure-, Sulfonsäure-, Schwefelsäure-, Phosphonsäure- und/oder Phosphorsäuregruppen mit einer oder mehreren Säuregruppe(n). Es ist jedoch auch möglich, andere Säuregruppen mit einer ähnlichen Acidität oder in Säuregruppen umwandelbare funktionelle Gruppen einzusetzen. Gemäß einer besonders bevorzugten Ausführungsform werden die ionogenen Gruppen ausgewählt aus einer oder mehreren der folgenden funktionellen Gruppen: $-COOH$, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO-$, $-SO_3^-$, $-OSO_3^-$, $-P(O)_2(OH)^-$ oder $-P(O)_3^{3-}$, $-O-P(O)_2^{2-}$ und $-OP(O)_2(OH)^-$ oder $-OP(O)_3^{2-}$ in der Form ihrer Metall-, bevorzugt Alkalimetall- oder Ammoniumsalze.

Die ionogene Gruppen enthaltenden Teilchen können folglich ionogene Gruppen an der Oberfläche der Teilchen aufweisen und eine Kern-Schale-artige Struktur bilden oder im wesentlichen in dem gesamten Teilchen ionogene Gruppen tragen, d.h. praktisch homogen bzw. durchgehend funktionalisiert sein.

Die vorstehend beschriebenen ionogenen Gruppen können durch unterschiedliche Verfahren an die Oberfläche oder in das gesamte Teilchen eingeführt werden.

Es ist jedoch bevorzugt, ionogene Gruppen enthaltende Teilchen durch Copolymerisation mindestens eines der vorstehenden Basismonomere in Gegenwart mindestens eines Monomers mit ionogenen Gruppen, vorzugsweise Säuregruppen, zu bilden. Durch dieses Verfahren, das auch als einstufiges Verfahren bezeichnet werden kann, können oligomere, aber auch polymere ionogene Gruppen enthaltende Teilchen erhalten werden. Die Copolymerisation in homogener Phase, beispielsweise in Lösung oder in Substanz, eignet sich besonders gut zur Bildung von oligomeren, ionogene Gruppen enthaltenden Teilchen mit den vorstehenden ionogenen Gruppen in dem gesamten Teilchen. Bei der Copolymerisation durch beispielsweise Emulsionspolymerisation, d.h. bei Anwendung einer Emulsion eines Monomers bzw. Monomergemischs in beispielsweise Wasser, lassen sich insbesondere polymere, ionogene Gruppen enthaltende Teilchen herstellen, bei welchen die ionogenen Gruppen vorzugsweise auf der Mikrogeloberfläche lokalisiert sind. Es ist jedoch auch möglich, ausgehend von einem Basismonomer mit geeigneten ionogenen Gruppen, vorzugsweise Säuregruppen oder in Säuregruppen umwandelbare Gruppen, ein oligomeres oder polymeres Teilchen aufzubauen. Beispielsweise ist denkbar, ein Basismonomer, welches in Säuregruppen umwandelbare Gruppen aufweist,

zuerst zu einem oligomeren oder polymeren Teilchen zu vernetzen und erst anschließend durch chemische Modifikation, beispielsweise einer Entschützungsreaktion, einer Hydrolyse, einer Additionsreaktion oder einer Substitutionsreaktion, die gewünschten ionogenen Gruppen an der Oberfläche des Teilchens zu bilden, um insbesondere protonenleitende Eigenschaften zu erzeugen.

Darüber hinaus ist es bevorzugt, zuerst mindestens eines der vorstehenden Basismonomere derart zu vernetzen, daß ein Oligomer-, Präpolymer oder Polymerteilchen gebildet wird, und anschließend mindestens ein Monomer mit ionogenen Gruppen, vorzugsweise Säuregruppen, an der Oberfläche dieses Teilchens aufzupfropfen, um eine Kern-Schale-artige Struktur zu bilden. Gemäß dieser Verfahrensweise, die einem zweistufigen Verfahren entspricht, können oligomere oder polymere, ionogene Gruppen enthaltende Teilchen hergestellt werden, welche die ionogenen Gruppen im wesentlichen nur an der Oberfläche oder einem oberflächennahen Bereich tragen. Die Verfahrensweise in homogener Phase, beispielsweise in Lösung oder in Substanz, eignet sich insbesondere zur Bildung von oligomeren, ionogene Gruppen enthaltenden Teilchen und die Verfahrensweise der Emulsionspolymerisation eignet sich besonders zur Herstellung von polymeren, ionogene Gruppen enthaltenden Teilchen. In diesem Zusammenhang ist es bevorzugt, daß das Aufpfropfen eines Monomers mit ionogenen Gruppen einen hohen Bedeckungsgrad mit den ionogenen Gruppen an der Oberfläche des Teilchens ergibt. Vorzugsweise ist die Oberfläche des ionogene Gruppen enthaltenden Teilchens nahezu quantitativ mit ionogenen Gruppen, vorzugsweise Säuregruppen, funktionalisiert, was bedeutet, daß im wesentlichen jede an der Oberfläche eines vernetzten bzw. vorvernetzten Teilchens vorhandene reaktive Gruppe mit einem Monomer mit ionogenen Gruppen abreagiert hat.

Gemäß einer bevorzugten Ausführungsform sind die Monomere mit ionogenen Gruppen Monomere mit Säuregruppen, wie (Meth)acrylsäure, Maleinsäure, Vinylsulfonsäure, Vinylphosphonsäure und/oder Styrolsulfonsäure, sowie Derivate und Gemische davon. Gemäß einer besonders bevorzugten Ausführungsform werden die ionogenen Gruppen ausgewählt aus einer oder mehreren der folgenden funktionellen Gruppen: $-COOH$, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO^-$, $-SO_3^-$, $-OSO_3^-$, $-P(O)_2(OH)^-$ oder $-P(O)_3^{3-}$, $-O-P(O)_2^{2-}$ und $-OP(O)_2(OH)^-$ oder $-OP(O)_3^{2-}$ in der Form ihrer Metall-, bevorzugt Alkalimetall- oder Ammoniumsalze.

Gemäß einer bevorzugten Ausführungsform sind die ionogene Gruppen enthaltenden Teilchen organische Polymere und/oder Oligomere, die aus mindestens Styrol und Vinylsulfonsäure hergestellt sind.

Die Bildung der ionogene Gruppen enthaltenden Teilchen durch Polymerisation bzw. Copolymerisation wird durch übliche Verfahren, beispielsweise thermisch, photochemisch oder radikalisch, gegebenenfalls unter Zugabe eines Radikalstarters vom Peroxidtyp oder Azotyp durchgeführt. Geeignete Radikalstarter vom Peroxidtyp oder Azotyp sind einem Fachmann auf dem einschlägigen Fachgebiet bekannt und können in geeigneter Weise ausgewählt werden.

Die Teilchengröße der ionogene Gruppen enthaltenden Teilchen unterliegt grundsätzlich keiner wesentlichen Beschränkung, solange sie im Nanometerbereich liegt. Die ionogene Gruppen enthaltenden Teilchen weisen vorzugsweise einen mittleren Teilchendurchmesser in einem Bereich von 5 nm bis 500 nm auf, wobei ein Bereich von 20 nm bis 400 nm besonders bevorzugt ist und ein Bereich von 30 nm bis 300 nm am meisten bevorzugt ist.

Wenn die ionogene Gruppen enthaltenden Teilchen polymerer Natur sind, können diese eine feste Phasengrenze mit der umgebenden Matrix der Gasdiffusionselektrode bzw. der Katalysatorschicht aufweisen. Es ist jedoch auch möglich, daß diese keine feste Phasengrenze mit der umgebenden Matrix aufweisen. Die Teilchengröße derartiger Polymere, die auch als Mikrogele bezeichnet werden können, liegt vorzugsweise in einem Bereich von etwa 40 nm bis etwa 200 nm. Diese ionogene Gruppen enthaltenden Polymerteilchen werden vorzugsweise durch Emulsionspolymerisation hergestellt.

Unter Emulsionspolymerisation im Sinne der vorliegenden Erfindung wird insbesondere ein an sich bekanntes Verfahren verstanden, bei dem als Reaktionsmedium Wasser verwendet wird, worin die verwendeten Monomere in Anwesenheit von Emulgatoren und radikalbildenden Substanzen unter Bildung von wässrigen Polymerlatices polymerisiert werden (s. u.a. Römpp Lexikon der Chemie, Band 2, 10. Auflage 1997; P. A. Lovell, M. S. El-Aasser, Emulsion Polymerization and Emulsion Polymers, John Wiley & Sons, ISBN: 0 471 96746 7; H. Gerrens, Fortschr. Hochpolym. Forsch. 1, 234 (1959)). Die Emulsionspolymerisation liefert im Unterschied zur Suspensions- oder Dispersionspolymerisation in der Regel feinere Teilchen. Die kleineren Teilchen liegen mit ihrem geringen mittleren Durchmesser unterhalb der kritischen Fehlstellengröße, d.h. die sie enthaltenden Matrices unterliegen nur geringen mechanischen Beeinträchtigungen, bei entsprechendem Dispersionsgrad.

Durch die Wahl der Monomere stellt man die Glasübergangstemperatur und die Breite des Glasübergangs der Polymerteilchen ein. Die Bestimmung der Glasübergangstemperatur (Tg) und der Breite des Glasübergangs ($\Delta$Tg) der Mikrogele bzw. der im wesentlichen kugelförmigen Polymerteilchen erfolgt mittels Differential-Scanning-Kalorimetrie (DSC), bevorzugt wie im folgenden beschrieben. Dazu werden für die Bestimmung von Tg und $\Delta$Tg zwei Abkühl/Aufheiz-Zyklen durchgeführt. Tg und $\Delta$Tg werden im zweiten Aufheiz-Zyklus bestimmt. Für die Bestimmungen werden etwa 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt

und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt durch rasches Abkühlen mit flüssigem Stickstoff. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glasübergangstemperatur Tg erhält man als Mittelwert dieser beiden Temperaturen und die Breite des Glasübergangs ΔTg erhält man aus der Differenz der beiden Temperaturen.

Kautschukartige Polymerteilchen weisen eine Glasübergangstemperatur von im allgemeinen < 23°C auf. Thermoplastische Polymerteilchen weisen im allgemeinen eine Glasübergangstemperatur von > 23°C auf.

Die Breite des Glasübergangs ist bei den erfindungsgemäß verwendeten Polymerteilchen bevorzugt größer als 5 °C, bevorzugter größer als 10°C.

Kautschukartige Polymerteilchen sind bevorzugt solche auf Basis von konjugierten Dienen wie Butadien, Isopren, 2-Chlorbutadien und 2,3-Dichlorbutadien, sowie Ethen, Ester der Acryl- und Methacrylsäure, Vinylacetat, Styrol oder Derivate davon, Acrylnitril, Acrylamide, Methacrylamide, Tetrafluorethylen, Vinylidenfluorid, Hexafluorpropen, doppelbindungshaltige Hydroxyverbindungen wie z.B. Hydroxyethylmethacrylat, Hydroxyethylacrylat, Hydroxypropylacrylat, Hydroxybutylmethacrylat, Acrolein oder Kombinationen davon.

Bevorzugte Monomere bzw. Monomerkombinationen schließen ein: Butadien, Isopren, Acrylnitril, Styrol, α-Methylstyrol, Chloropren, 2,3-Dichlorbutadien, Butylacrylat, 2-Ethylhexylacrylat, Hydroxyethylmethacrylat, Tetrafluorethylen, Vinylidenfluorid und Hexafluorpropen.

"Auf Basis" bedeutet hier, dass die Polymerteilchen bevorzugt zu mehr als 60 Gew.-%, bevorzugt mehr als 70 Gew.-%, bevorzugter zu mehr als 90 Gew.-% aus den genannten Monomeren bestehen.

Die Polymerteilchen können vernetzt oder unvernetzt sein. Im Falle vernetzter Polymerteilchen spricht man auch von Mikrogelen bzw. im wesentlichen kugelförmigen Polymerteilchen. Die Polymerteilchen können insbesondere solche auf Basis von Homopolymeren oder statistischen Copolymeren sein. Die Begriffe Homopolymere und statistische Copolymere sind dem Fachmann bekannt und beispielsweise erläutert bei

Vollmert, Polymer Chemistry, Springer Verlag 1973.

Als Polymerbasis der kautschukartigen, vernetzten oder unvernetzten Polymerteilchen, enthaltend ionogene Gruppen, können insbesondere dienen:

BR: Polybutadien,

ABR: Butadien/Acrylsäure-$C_{1-4}$Alkylestercopolymere,

IR: Polyisopren,

SBR: statistische Styrol-Butadien-Copolymerisate mit Styrolgehalten von 1-60, vorzugsweise 5-50 Gew.-%,

FKM: Fluorkautschuk,

ACM: Acrylatkautschuk,

NBR: Polybutadien-Acrylnitril-Copolymerisate mit Acrylnitrilgehalten von 5-60, vorzugsweise 10- 60 Gew.-%,

CR: Polychloropren

EAM: Ethylen/Acrylatcopolymere,

EVM: EthylenNinylacetatcopolymere.

Erfindungsgemäße nicht-kautschukartige, insbesondere thermoplastische Polymerteilchen, weisen zweckmäßig eine Glasübergangstemperatur Tg von mehr als 23°C auf. Die Breite des Glasübergangs ist bei den thermoplastartigen Polymerteilchen bevorzugt größer als 5 °C (wobei die Tg bzw. die Breite des Glasübergangs wie oben beschrieben bestimmt wird). Nicht-kautschukartige, insbesondere thermoplastische Polymerteilchen sind bevorzugt solche auf Basis von Methacrylaten, insbesondere Methylmethacrylat, Styrol oder Styrolderivaten, wie α-Methylstyrol, para-Methylstyrol, Acrylnitril, Methacrylnitril, Vinylcarbazol oder Kombinationen davon. "Auf Basis" bedeutet hier, dass die Polymerteilchen

bevorzugt zu mehr als 60 Gew.-%, bevorzugt mehr als 70 Gew.-%, bevorzugter zu mehr als 90 Gew.-% aus den genannten Monomeren bestehen.

Bevorzugtere thermoplastische Polymerteilchen sind solche auf Basis von Methacrylaten, insbesondere Methylmethacrylat, Styrol, α-Methylstyrol und Acrylnitril.

Die Polymerteilchen weisen bevorzugt eine annähernd kugelförmige Geometrie auf.

Die erfindungsgemäß verwendeten Polymerteilchen weisen vorzugsweise einen mittleren Teilchendurchmesser im Bereich von 5 nm bis 500 nm, besonders bevorzugt von 20 nm bis 400 nm, am meisten bevorzugt von 30 nm bis 300 nm auf. Der mittlere Teilchendurchmesser wird mittels Ultrazentrifugation mit dem wässrigen Latex der Polymerteilchen aus der Emulsionspolymerisation bestimmt. Die Methode liefert einen Mittelwert für den Teilchendurchmesser unter Berücksichtigung etwaiger Agglomerate. (H. G. Müller (1996) Colloid Polymer Science 267: 1113-1116 sowie W. Scholtan, H. Lange (1972) Kolloid-Z u. Z. Polymere 250: 782). Die Ultrazentrifugation hat den Vorteil, dass die gesamte Teilchengrößenverteilung charakterisiert wird und verschiedene Mittelwerte wie Zahlenmittel, Gewichtsmittel aus der Verteilungskurve berechnet werden können.

Die erfindungsgemäß verwendeten mittleren Durchmesserangaben werden durch eine Durchmesserbestimmung mittels dynamischer Lichtstreuung bestimmt. Sie wird ebenfalls am Latex durchgeführt. Üblich sind Laser, die bei 633 nm (rot) und bei 532 nm (grün) arbeiten. Bei der dynamischen Lichtstreuung wird nicht wie bei der Ultrazentrifugation die gesamte Teilchengrößenverteilung charakterisiert, sondern man erhält einen Mittelwert, bei dem große Teilchen überproportional gewichtet werden.

Die erfindungsgemäß verwendeten Polymerteilchen weisen bevorzugt einen gewichtsgemittelten Teilchendurchmesser im Bereich von 5 nm bis 500 nm, bevorzugt von 20 nm bis 400 nm, besonders bevorzugt von 30 nm bis 300 nm auf.

Die erfindungsgemäßen ionogene Gruppen enthaltenden Teilchen können durch Emulsionspolymerisation hergestellt werden, wobei durch Variation der Einsatzstoffe wie Emulgatorkonzentration, Initiatorkonzentration, Flottenverhältnis von organischer zu wässriger Phase, Verhältnis von hydrophilen zu hydrophoben Monomeren, Menge an vernetzendem Monomer, Polymerisationstemperatur etc. die Teilchengröße in einem weiten Durchmesserbereich eingestellt wird.

Nach der Polymerisation können die Latices durch Vakuumdestillation oder durch Behandlung mit überhitztem Wasserdampf behandelt werden, um flüchtige Komponenten, insbesondere nicht umgesetzte Monomeren abzutrennen.

Die Aufarbeitung der so hergestellten Polymerteilchen kann beispielsweise durch Eindampfen, Elektrolyt-Koagulation, durch Co-koagulation mit einem weiteren Latexpolymer, durch Gefrierkoagulation (vgl. US 2,187,146) oder durch Sprühtrocknung erfolgen.

Die durch Emulsionspolymerisation hergestellten ionogene Gruppen enthaltenden Polymerteilchen sind in einer bevorzugten Ausführungsform mindestens teilweise vernetzt.

Die Vernetzung der durch Emulsionspolymerisation hergestellten ionogene Gruppen enthaltenden Polymerteilchen erfolgt bevorzugt durch den Zusatz von polyfunktionellen Monomeren bei der Polymerisation, wie z.B. durch den Zusatz von Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat, Acrylate und Methacrylate von mehrwertigen, vorzugsweise 2- bis 4-wertigen $C_{2-10}$ Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit sowie ungesättigten Polyestern aus aliphatischen Di- und Polyolen und Maleinsäure, Fumarsäure, und/oder Itaconsäure.

Die Vernetzung der ionogene Gruppen enthaltenden Polymerteilchen kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung während der Emulsionspolymerisation ist bevorzugt. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen $C_{2-10}$ Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Polymerteilchen im Anschluß an die Emulsionspolymerisation setzt man am besten die Latices ein, die bei der Emulsionspolymerisation erhalten werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl) peroxid, t-Butylperbenzoat sowie organische Azoverbindungen, wie Azobisiso-butyronitril und Azobiscyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis etwa 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung von C=C-Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmittel, beispielsweise Organometallhydridkomplexe erfolgen.

Vor, während oder nach der Nachvernetzung kann ggf. eine Teilchenvergrößerung durch Agglomeration durchgeführt werden.

Die erfindungsgemäß eingesetzten vernetzten, ionogene Gruppen enthaltenden Teilchen bzw. Polymerteilchen weisen zweckmäßig in Toluol bei 23°C unlösliche Anteile (Gelgehalt) von mindestens etwa 70 Gew.-%, bevorzugter mindestens etwa 80 Gew.-%, noch bevorzugter mindestens etwa 90 Gew.-% auf. Der in Toluol unlösliche Anteil wird dabei in Toluol bei 23° bestimmt. Hierbei werden 250 mg der Polymerteilchen in 25 ml Toluol 24 Stunden unter Schütteln bei 23°C gequollen. Nach Zentrifugation mit 20000 Upm wird der unlösliche Anteil abgetrennt und getrocknet. Der Gelgehalt ergibt sich aus dem Quotienten des getrockneten Rückstandes und der Einwaage und wird in Gew.-% angegeben.

Die erfindungsgemäß eingesetzten vernetzten ionogene Gruppen enthaltenden Polymerteilchen weisen weiterhin zweckmäßig in Toluol bei 23°C einen Quellungsindex von weniger als etwa 80, bevorzugter von weniger als 60, noch bevorzugter von weniger als 40 auf. So können die Quellungsindizes der Polymerteilchen (Qi) besonders bevorzugt zwischen 1-15 und 1-10 liegen. Der Quellungsindex wird aus dem Gewicht der in Toluol bei 23°C für 24 Stunden gequollenen lösungsmittelhaltigen Polymerteilchen (nach Zentrifugation mit 20000 Upm) und dem Gewicht der trockenen Polymerteilchen berechnet:

$$\text{Qi} = \text{Naßgewicht der Polymerteilchen / Trockengewicht der Polymerteilchen.}$$

Zur Ermittlung des Quellungsindex läßt man 250 mg der Polymerteilchen in 25 ml Toluol 24 h unter Schütteln quellen. Das Gel wird abzentrifugiert und gewogen und anschließend bei 70 °C bis zur Gewichtskonstanz getrocknet und nochmals gewogen.

Die erfindungsgemäß verwendeten ionogene Gruppen enthaltenden Polymerteilchen enthalten ionogene Gruppen, die ionisch sind oder zur Bildung ionischer Gruppen befähigt sind. Sie vermögen auf diese Weise protonenliefernd und/oder protonenakzeptierend zu sein.

Gemäß einer bevorzugten Ausführungsform sind die ionogenen Gruppen Säuregruppen. Gemäß einer besonders bevorzugten Ausführungsform werden die ionogenen Gruppen ausgewählt aus einer oder mehreren der folgenden funktionellen Gruppen: -COOH, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO^-$, $-SO_3^-$, $-OSO_3^-$, $-P(O)_2(OH)^-$ oder $-P(O)_3^{3-}$, $-O-P(O)_2^{2-}$ und $-OP(O)_2(OH)^-$ oder $-OP(O)_3^{2-}$ in der Form ihrer Metall-, bevorzugt Alkalimetall- oder Ammoniumsalze.

Erfindungsgemäß besonders bevorzugte ionogene Gruppen im Sinne der Erfindung werden ausgewählt aus $-SO_3H$, $-PO(OH)_2$, $-O-P(O)(OH)_2$ und/oder deren Salzen und/oder deren Derivate, wie insbesondere Partialester davon.

Die ionogenen Gruppen können je nach Herstellungsweise oberflächenständig und/oder nicht oberflächenständig sein.

Die ionogenen Gruppen können durch Einpolymerisation entsprechend funktionalisierter Monomere und/oder durch Modifikation nach der Polymerisation in die Polymerteilchen eingebracht werden.

Funktionalisierte Monomere werden beispielsweise aus der Gruppe ausgewählt, die besteht aus: Acrylsäure, Methacrylsäure, Vinylbenzoesäure, Itaconsäure, Maleinsäure, Fumarsäure, Crotonsäure, Vinylsulfonsäure, Styrolsulfonsäure, Phosponsäure- oder Phosphorsäuregruppen-enthaltenden Monomeren mit polymerisierbaren C=C-Doppelbindungen, wie Vinylphosphonsäure, 2-Phosphonomethyl-acrylsäure und 2-Phosphonomethyl-acrylsäureamid, Phosphonsäure- oder Phosphorsäureester von hydroxyfunktionellen, polymerisierbare C=C-Doppelbindungen-aufweisenden Monomeren oder Salzen oder Derivaten davon.

Phosphorsäureester von hydroxyfunktionellen polymerisierbare C=C-Doppelbindungen-aufweisenden Monomeren weisen bevorzugt die folgenden Formeln (I) oder (II) der folgenden Methacrylat-Verbindungen auf:

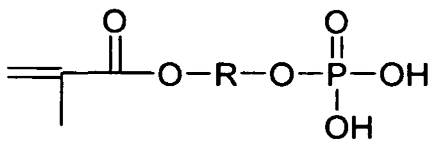

(I),

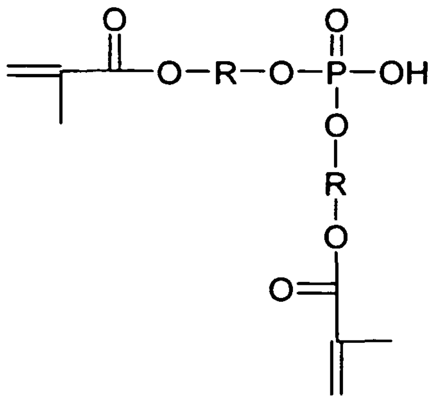

(II),

worin R eine zweiwertige organische Gruppe, wie insbesondere $C_{1-10}$-Alkylen ist. Bevorzugt ist R eine $C_{2-4}$-Alkylengruppe (d.h., eine $C_{2-4}$-Alkandiylgruppe), wie eine Ethylen- oder eine n-Propylengruppe. Auch Salze dieser Verbindungen sind anwendbar, wie insbesondere Alkalimetallsalze, bevorzugt das Natriumsalz oder Ammoniumsalze. Auch die entsprechenden Acrylate sind einsetzbar. Weiterhin können Partialester mit anderen gesättigten oder ungesättigten Carbonsäuren dieser Verbindungen verwendet werden. Der Begriff der Partialester schließt erfindungsgemäß sowohl den Fall ein, dass ein Teil der sauren Hydroxylgruppen der ionogenen Gruppe teilweise verestert ist, als auch den Fall, worin in den Polymerteilchen ein Teil der Hydroxylgruppen verestert ist, ein anderer Teil nicht verestert ist.

Der Anteil der einpolymerisierten, ionogene Gruppen aufweisenden, funktionellen Monomere beträgt bevorzugt von 0,1 bis 100 Gew.-%, bevorzugter 0,2 bis 99,5 Gew.-%, bezogen auf die Gesamtmenge der Monomere. Dies bedeutet, dass auch Homopolymere dieser ionogene Gruppen tragenden Monomere eingesetzt werden können. Beispielsweise können mindestens 10 Gew.-%, mindestens 20 Gew.-% oder mindestens 30 Gew.-% dieser Monomere vorliegen.

Die ionogenen Gruppen $-OSO_3H$ und $-OP(O)(OH)_2$ können beispielsweise auch durch Umsetzung von hydroxylmodifizierten Polymerteilchen (wie durch Einpolymerisation von Hydroxyalkyl(meth)acrylaten enthaltenden) oder durch Addition von Schwefel- bzw. Phosphorsäure an epoxidhaltige (beispielsweise glycidylmethacrylathaltige) Polymerteilchen mit Schwefelsäure oder Phosphorsäure, durch Addition von Schwefelsäure oder Phosphorsäure an doppelbindungshaltige Polymerteilchen, durch Zersetzung von Persulfaten oder Perphosphaten in Gegenwart von doppelbindungshaltigen Polymerteilchen, sowie durch Umesterung nach der Polymerisation in die Polymerteilchen eingebracht werden. Weiterhin können die Gruppen $-SO_3H$ und $-P(O)(OH)_2$ auch durch Sulfonierung bzw. Phosphonierung von aromatischen Vinylpolymeren eingebracht werden.

Ionogene Gruppen können weiterhin auch durch Umsetzung hydroxylmodifizierter Polymerteilchen mit entsprechend funktionalisierten Epoxiden hergestellt werden.

Neben den genannten ionogenen Gruppen können weitere funktionelle Gruppen zur Steuerung der Eigenschaften insbesondere in die Oberfläche der Polymerteilchen eingebracht werden, wie durch chemische Umsetzung der bereits vernetzten Polymerteilchen mit gegenüber C=C-Doppelbindungen reaktiven Chemikalien. Diese reaktiven Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z.B. Mercapto-, Dithiocarbamat-, Polysulfid-, Xanthogenat- und/oder Dithiophosphorsäuregruppen und/oder ungesättigte Dicarbonsäuregruppen an die Polymerteilchen chemisch gebunden werden können. Ziel der Modifizierung ist insbesondere die Verbesserung der Verträglichkeit mit einem Matrixmaterial, in das die protonenleitenden Polymerteilchen eingearbeitet werden bzw. die Steuerung der Benetzungseigenschaften der Katalysatorschicht.

Besonders bevorzugte Methoden der Modifizierung sind die Pfropfung der Polymerteilchen mit funktionellen Monomeren sowie die Umsetzung mit niedermolekularen Agentien. Auf diese Weise können gegebenenfalls auch die ionogenen, protonenspendenden oder protonenakzeptierenden Monomere in die Polymerteilchen eingebracht werden.

Für die Pfropfung der Polymerteilchen mit funktionellen Monomeren geht man zweckmäßigerweise von der wässrigen Mikrogeldispersion aus, die man mit polaren Monomeren wie Vinylsulfonsäure, Styrolsulfonsäure, Acrylsäure, Methacrylsäure, Itaconsäure, Hydroxyethyl(meth)acrylat (der Ausdruck "(Meth)acrylat" schließt in vorliegender Anmeldung sowohl Methacrylat als auch Acrylat ein), Hydroxypropyl(meth)acrylat, Hydroxybutyl(meth)acrylat, Acrylnitril, Acrylamid, Methacrylamid, Acrolein, Phosponsäure- oder Phosphorsäuregruppen-enthaltenden Monomeren mit polymerisierbaren C=C-Doppelbindungen, wie Vinylphosphonsäure, 2-Phosphonomethylacrylsäure und 2-Phosphonomethylacrylsäureamid, Phosphonsäure- oder Phosphorsäureester von hydroxyfunktionellen, polymerisierbare C=C-Doppelbindungen-aufweisenden Monomeren oder Salzen oder Derivaten, wie insbesondere Partialester davon unter den Bedingungen einer radikalischen Emulsionspolymerisation umsetzt. Auf diese Weise werden Polymerteilchen mit einer Kern/Schale-Morphologie erhalten. Es ist wünschenswert, daß das im Modifikationsschritt verwendete Monomer möglichst quantitativ auf das unmodifizierte Polymerteilchen bzw. Mikrogel aufpfropft. Zweckmäßigerweise werden die funktionellen Monomere vor der vollständigen Vernetzung der Mikrogele hinzudosiert. Auch eine Modifikation doppelbindungshaltiger Polymerteilchen, wie z.B. durch Ozonolyse kommt in Frage.

In einer bevorzugten Ausführungsform sind die Polymerteilchen, insbesondere die Mikrogele durch Hydroxyl-Gruppen insbesondere auch an der Oberfläche davon modifiziert. Der Hydroxylgruppengehalt der Polymerteilchen, insbesondere der Mikrogele wird durch Umsetzung mit Acetanhydrid und Titration der hierbei frei werdenden Essigsäure mit KOH nach DIN 53240 als Hydroxyl-Zahl mit der Dimension mg KOH/g Polymer bestimmt. Die Hydroxylzahl der Polymerteilchen, insbesondere der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gew.-%, bezogen auf die Gesamtmenge an eingesetzten Polymerteilchen, insbesondere Mikrogel, besonders bevorzugt sind 0,5-10 Gew.-% bezogen auf Gesamtmenge an Polymerteilchen, insbesondere Mikrogel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Menge der ionogene Gruppen enthaltenden Teilchen in der Katalysatorschicht unterliegt keiner wesentlichen Beschränkung. Es ist jedoch bevorzugt, dass die Katalysatorschicht die ionogene Gruppen enthaltenden Teilchen in Mengen von 0,2 bis 50 Gew.-%, besonders bevorzugt 0,5 bis 10 Gew.-%, bezogen auf die Gesamtmasse des elektrisch leitfähigen Trägermaterials und des Elektrokatalysators, enthält.

Die Verteilung der ionogene Gruppen enthaltenden Teilchen in der Katalysatorschicht kann in gewünschter Art und Weise variiert werden. Es ist jedoch bevorzugt, daß die ionogene Gruppen enthaltenden Teilchen in der Katalysatorschicht homogen verteilt sind.

Vorzugsweise sind die ionogene Gruppen enthaltende Teilchen hauptsächlich aus einem oder mehreren organischen Polymer(en) und/oder Oligomer(en) aufgebaut.

Die ionogene Gruppen enthaltenden Teilchen sind vorzugsweise hauptsächlich aus einem kautschukartigen Polymer oder Oligomer oder einem nicht-kautschukartigen Polymer oder Oligomer, vorzugsweise einem thermoplastischen Polymer oder Oligomer, aufgebaut.

Die ionogene Gruppen enthaltenden Teilchen weisen vorzugsweise an der Oberfläche oder in dem gesamten Teilchen ionogene Gruppen, insbesondere kovalent gebundene Säuregruppen, auf, wobei die Säuregruppen besonders bevorzugt Carbonsäure-, Sulfonsäure-, Schwefelsäure-, Phosphonsäure- und/oder Phosphorsäuregruppen sind.

Gemäß einer bevorzugten Ausführungsform der vorliegenden Erfindung sind die ionogene Gruppen enthaltenden Teilchen organische Polymere und/oder Oligomere, die aus mindestens Styrol und Vinylsulfonsäure hergestellt sind.

Die ionogene Gruppen enthaltenden Teilchen weisen vorzugsweise einen mittleren Teilchendurchmesser in einem Bereich von 5 nm bis 500 nm auf.

Die ionogene Gruppen enthaltenden Teilchen weisen vorzugsweise eine im wesentlichen kugelförmige oder im wesentlichen sternförmige Form auf. Vorzugsweise sind die ionogene Gruppen enthaltenden Teilchen Feststoffteilchen.

Gemäß einer bevorzugten Ausführungsform der vorliegenden Erfindung werden die ionogene Gruppen enthaltenden Teilchen durch Emulsionspolymerisation hergestellt.

Ferner wird ein Verfahren zur Herstellung der erfindungsgemäßen Gasdiffusionselektrode für Polymerelektrolyt-Brennstoffzellen mit einer Arbeitstemperatur bis 250 °C bereitgestellt, die mehrere gasdurchlässige, elektrisch leitfähige Schichten aufweist, die mindestens eine Gasdiffusionsschicht und eine Katalysatorschicht umfassen, wobei die Katalysatorschicht ionogene Gruppen enthaltenden Teilchen eines mittleren Teilchendurchmessers im Nanometerbereich enthält, umfassend die folgenden Schritte:

A) Herstellen einer Suspension aus mindestens einem partikulären, elektrisch leitfähigen Trägermaterial für die Katalysatorschicht, bei dem wenigstens ein Teil der Partikel einen Elektrokatalysator trägt und aus den ionogene Gruppen enthaltenden Teilchen mit einem mittleren Teilchendurchmesser im Nanometerbereich in einem (geeigneten) Lösungsmittel,
B) Ausformen der Suspension in eine Elektrodenform auf einer (geeigneten) Unterlage, z.B. einer Membran, einer Gasdiffusionslage oder einem inerten Substrat,
C) Trocknen der Elektrodenform aus Schritt B) auf der Unterlage und
D) Überführen der Elektrodenform aus Schritt C) in eine Membran-Elektroden-Einheit.

Zur Durchführung von Schritt (A) wird das partikuläre, elektrisch leitfähige Trägermaterial für die Katalysatorschicht, welches wenigstens teilweise einen Elektrokatalysator trägt, bevorzugt als Pulver, besonders vorteilhaft als nanodisperses Pulver, bereitgestellt. Als besonders geeignet haben sich Trägermaterialien erwiesen, die unter der Bezeichnung Carbon Blacks, wie Vulcan XC oder Shawinigan Black bekannt sind. Das wenigstens teilweise katalysatorbeschichtete Trägermaterial wird vorzugsweise in Wasser suspendiert. Die ionogene Gruppen enthaltenden Teilchen werden vorzugsweise in Form einer Mikrogeldispersion bereitgestellt. Diese kann dann z.B. in Wasser zugegeben werden und die Mischung wird mit Isopropanol versetzt und durch Rühren suspendiert.

Im Rahmen des erfindungsgemäßen Verfahrens ist bevorzugt vorgesehen, dass das partikuläre, elektrisch leitfähige Trägermaterial für die Katalysatorschicht als Suspension oder Paste bereitgestellt wird und/oder das Ausformen der Katalysatorschicht in die Elektrodenform durch Aufbringen der Suspension oder der Paste auf wenigstens eine Unterlage und durch nachfolgendes Trocknen erfolgt.

Als Unterlage kann im Rahmen des erfindungsgemäßen Verfahrens vorteilhaft eine Gasdiffusionsschicht, eine Polymerelektrolytmembran oder ein inertes Substrat verwendet werden.

Gemäß einer bevorzugten Ausführungsform der vorliegenden Erfindung werden die ionogene Gruppen enthaltenden Teilchen in Mengen von 0,2 bis 50 Gew.%, besonders bevorzugt 0,5 bis 10 Gew.-%, bezogen auf die Gesamtmasse des elektrisch leitfähigen Trägermaterials und des Elektrokatalysators in Schritt B) hinzugefügt.

Schritt (B) kann bevorzugt durch Druckverfahren, wie z.B. das Ink-Jet-Verfahren realisiert werden. Dadurch lassen sich Katalysatorschichten mit einer Dicke von 10 bis 200 μm, vorzugsweise 10 bis 100 μm, und am meisten bevorzugt 10 bis 50 μm auf einer geeigneten Unterlage herstellen. Als Unterlage können Elektrolytmembran, die Gasdiffusionslage oder ein inertes Substrat dienen.

Im Fall der Verwendung einer Gasdiffusionslage ist die Herstellung der Gasdiffusionselektrode nach Beendigung des Trocknungsschrittes (C) bereits abgeschlossen. Im Fall der Verwendung einer Elektrolytmembran werden die Katalysatorschichten bevorzugt beidseitig aufgetragen. Im Fall der Verwendung eines inerten Substrates wird die Katalysatorschicht üblicherweise in noch feuchter Form nachfolgend mit einer Gasdiffusionslage abgedeckt und Schritt (C) zugeführt.

Schritt (C) erfolgt bevorzugt bei Temperaturen im Bereich von 100 bis 200°C im Stickstoffstrom. Im Fall der Verwendung eines inerten Substrates wird das Substrat nach Abschluß des Trocknungsschrittes von der Gasdiffusionselektrode entfernt.

Schritt (D) erfolgt bevorzugt durch Heißverpressung unter Anwendung von Druck und Temperatur. Zur Herstellung der Membran-Elektroden-Einheit werden die Gasdiffusionselektroden aus Schritt (C) mit Phosphorsäure imprägniert, mit der Elektrolytmembran kombiniert und heißverpresst. Im Fall der Verwendung einer katalysatorbeschichteten Membran aus Schritt (C) wird diese mit zwei phosphorsäureimprägnierten Gasdiffusionslagen kombiniert und zur Membran-Elektroden-Einheit heißverpresst. In der Membran-Elektroden-Einheit formen Gasdiffusionslage und Katalysatorschicht die Gasdiffusionselektrode.
Schritt (B) bis (D) können sowohl stationär durchgeführt werden als auch im Rahmen kontinuierlicher Fertigungsprozesse.

Im Übrigen ist es auch im Rahmen des erfindungsgemäßen Verfahrens besonders bevorzugt, wenn

- die ionogene Gruppen enthaltenden Teilchen hauptsächlich aus einem oder mehreren organischen Polymer(en) und/oder Oligomer(en) aufgebaut sind,
- die ionogene Gruppen enthaltenden Teilchen hauptsächlich aus einem kautschukartigen Polymer oder Oligomer oder einem nicht-kautschukartigen Polymer oder Oligomer, vorzugsweise einem thermoplastischen Polymer oder Oligomer, aufgebaut sind,
- die ionogene Gruppen enthaltenden Teilchen an der Oberfläche oder in dem gesamten Teilchen ionogene Gruppen, vorzugsweise kovalent gebundene Säuregruppen, aufweisen,
- wobei die Säuregruppen vorzugsweise Carbonsäure-, Sulfonsäure-, Schwefelsäure-, Phosphonsäure- und/oder Phosphorsäuregruppen sind,
- die ionogene Gruppen enthaltenden Teilchen organische Polymere und/oder Oligomere sind, die aus mindestens Styrol und Vinylsulfonsäure hergestellt sind,
- die ionogene Gruppen enthaltenden Teilchen einen mittleren Teilchendurchmesser in einem Bereich von 5 nm bis

500 nm aufweisen,

- die ionogene Gruppen enthaltenden Teilchen eine im wesentlichen kugelförmige oder im wesentlichen sternförmige Form aufweisen,
- die ionogene Gruppen enthaltenden Teilchen Feststoffteilchen sind, und/oder
- die ionogene Gruppen enthaltenden Teilchen durch Emulsionspolymerisation hergestellt werden.

Gemäß der vorliegenden Erfindung wird ferner eine Polymerelektrolyt-Brennstoffzelle für den Betrieb bei Temperaturen bis 250 °C mit Gasdiffusionselektroden bereitgestellt, die mehrere gasdurchlässige, elektrisch leitfähige Schichten aufweisen, die mindestens eine Gasdiffusionsschicht und eine Katalysatorschicht umfassen, wobei die Katalysatorschicht ionogene Gruppen enthaltende Teilchen eines mittleren Teilchendurchmessers im Nanometerbereich enthält.

Die Polymerelektrolyt-Brennstoffzelle mit einer Arbeitstemperatur bis 250 °C enthält vorzugsweise ein Dotierungsmittel und ein basisches Polymer aus der Gruppe, umfassend Polybenzimidazol, Polypyridin, Polypyrimidin, Polyimidazol, Polybenzthiazol, Polybenzoxazol, Polyoxadiazol, Polychinoxalin, Polythiadiazol, Poly(tetrazapyren) oder eine Kombination von zwei oder mehreren davon.

In der Polymerelektrolyt-Brennstoffzelle wird das Dotierungsmittel vorzugsweise aus der Gruppe umfassend Phosphorsäure, Phosphorsäurederivate, Phosphonsäure, Phosphonsäurederivate, Schwefelsäure, Schwefelsäurederivate, Sulfonsäure, Sulfonsäurederivate oder eine Kombination von zwei oder mehreren davon, ausgewählt.

Die Polymerelektrolyt-Brennstoffzelle mit einer Arbeitstemperatur bis 250 °C enthält vorzugsweise eine Elektrode mit einem Elektrolyten aus der Gruppe, umfassend Phosphorsäure, Phosphorsäurederivate, Phosphonsäure, Phosphonsäurederivate, Schwefelsäure, Schwefelsäurederivate, Sulfonsäure, Sulfonsäurederivate oder eine Kombination von zwei oder mehreren davon.

Die ionogene Gruppen enthaltenden Teilchen sind vorzugsweise säurefunktionalisiert und weisen protonenleitende und grenzflächenaktive Eigenschaften auf, die bei Einsatz der Teilchen in der Katalysatorschicht dazu führen, den flüssigen Elektrolyten unter guter Benetzung der Katalysatorschicht in der Elektrode zu verteilen. Die grenzflächenaktiven Eigenschaften der Teilchen vermitteln weiterhin eine gute Haftung zwischen dem Katalysatorträgermaterial, der Gasdiffusionsschicht und/oder der Polymermembran in mechanisch stabilen Membran-Elektroden-Einheiten (MEE), so dass auf den Einsatz von perfluorierten Additiven, wie PTFE, als Binder verzichtet werden kann. Bedingt durch die Säurefunktionalisierung der ionogen funktionalisierten Teilchen erhöht sich das Bindevermögen der Katalysatorschicht für den flüssigen Elektrolyten. Durch Verzicht auf zusätzlich bindende Additive, wie PTFE, resultieren Elektroden mit hydrophilen Eigenschaften, welche - verglichen mit unmodifizierten Membran-Elektroden-Einheiten - eine Leistungssteigerung zeigen und zudem eine hohe Langzeitstabilität im Brennstoffzellenbetrieb aufweisen.

Die mit ionogenen Gruppen funktionalisierten Teilchen haben einen mittleren Teilchendurchmesser im Nanometerbereich, sind in Katalysatortinten dispergierbar und erlauben damit die Anwendung von Druckverfahren ("Ink-Jet-Verfahren") zur Herstellung von Gasdiffusionselektroden, so dass Katalysatorschichten mit einer Dicke < 50 $\mu$m mit niedrigem technischen Aufwand realisiert werden können. Der Verzicht auf fluorhaltige bindende Additive, wie PTFE, erlaubt zudem ein späteres problemloses Recycling des Edelmetallanteils der verwendeten Membran-Elektroden-Einheiten.

Gemäß einer bevorzugten Ausführungsform werden erfindungsgemäße Gasdiffusionselektroden für Brennstoffzellen bereitgestellt, umfassend mindestens jeweils eine Gasdiffusionsschicht und eine Katalysatorschicht, welche eine dazwischen sandwichartig angeordnete Polymermembran kontaktieren, wobei die Katalysatorschicht mit ionogenen Gruppen funktionalisierte Teilchen mit einem mittleren Teilchendurchmesser im Nanometerbereich in einer Konzentration von weniger als 40 %, bezogen auf die Gesamtmasse von Trägermaterial und Elektrokatalysator, enthält.

Ferner wird gemäß der vorliegenden Erfindung die Verwendung einer erfindungsgemäßen Gasdiffusionselektrode in Polymerelektrolyt-Brennstoffzellen mit einer Arbeitstemperatur bis 250 °C bereitgestellt.

<u>Figur 1</u> beschreibt eine Membran-Elektroden-Einheit (MEE), die zwei Gasdiffusionselektroden, eine Anode und eine Kathode, enthält, welche eine protonenleitende Elektrolytmembran sandwichartig einschließen und nach außen hin durch Bipolarplatten kontaktiert werden.

<u>Figur 2</u> beschreibt einen Verbund aus Katalysatorschicht der Kathode und Gasdiffusionsschicht auf einer Polyesterfolie nach Tabelle 2 mit Zusatz von ionogene Gruppen enthaltenden Teilchen (vgl. Beispiel 3).

<u>Figur 3</u> beschreibt einen Verbund aus Katalysatorschicht der Kathode und Gasdiffusionsschicht auf einer Polyesterfolie nach Tabelle 2 ohne Zusatz von ionogene Gruppen enthaltenden Teilchen (vgl. Vergleichsbeispiel 1).

<u>Figur 4</u> beschreibt eine Membran-Elektroden-Einheit mit flüssigem Elektrolyt in der Elektrode.

Figur 5 beschreibt eine Membran-Elektroden-Einheit mit nanodisperser Verteilung von Elektrolyt und Elektrokatalysator.

Figur 6 beschreibt die Strom-Spannungskurven bei 160°C, 3 bar, $H_2$ 783 sml/min, Luft 2486 sml/min, von Beispiel 5 im Vergleich zu Vergleichsbeispiel 3.

Figur 7 beschreibt den Verlauf der Spannung über die Zeit unter einer Last von 0,4 A/$cm^2$ bei 160°C, 3 bar, $H_2$ 783 sml/min, Luft 2486 sml/min von Beispiel 6 im Vergleich zu Vergleichsbeispiel 4.

## Beispiele

**Beispiel 1**: Herstellung einer Mikrogeldispersion

Die zur Herstellung der erfindungsgemäßen Gasdiffusionselektroden verwendete Mikrogeldispersion wird entsprechend Beispiel 1, S. 29-30 der DE 10 2007 011 424.0, mittels Emulsionspolymerisation hergestellt. Bei der Durchführung der Emulsionspolymerisation werden in einem 6-l-Glasrektor mit Rührwerk 3,93 kg Wasser vorgelegt und mit einem Stickstoffstrom gespült. In die Wasservorlage wird 24,2 g Mersolat® H95 (Natriumsalz einer Mischung langkettiger $C_{16}$-$C_{18}$ Alkylsulfonate, Firma Lanxess Deutschland GmbH) als ein Teil der gesamten Mersolatmenge von 26,3 g in das Wasser gegeben und gelöst. Danach werden 1000 g einer Mischung bestehend aus 88,5 Gew.-% Styrol (98 %ig von KMF Labor Handels GmbH), 10 Gew.-% Natrium-Styrolsulfonat (90 %ig von Fluka, Produktnummer: 94904) sowie 1,5 % Trimethylolpropantrimethacrylat (90%ig von Aldrich, Produktnummer: 2468-0) zusammen mit 0,08 g 4-Methoxyphenol (Arcos Organics, Artikel-Nr. 126001000, 99 %) in das Reaktionsgefäß gegeben. Nach Aufheizung der Reaktionsmischung auf 30-40°C wird eine frisch hergestellte 4%ige wässrige Prämixlösung zugegeben. Die Prämix-Lösung besteht aus: 0,169 g Ethylendiamintetraessigsäure (Fluka, Artikelnummer 03620), 0,135 g Eisen(II)sulfat•7$H_2O$ (Riedel de Haen, Artikelnummer 12354, ohne Kristallwasser berechnet), 0,347 g Rongalit C, Na-Formaldehydsulfoxylat (Merck-Schuchardt, Artikelnummer 8.06455, ohne Kristallwasser berechnet) sowie 0,524 g Trinatriumphosphat•12$H_2O$ (Acros, Artikelnummer 206520010, ohne Kristallwasser berechnet). Für die Aktivierung der Polymerisation wird eine Aktivatorlösung aus 0,56 g p-Methanhydroperoxid® (Trigonox NT 50, Akzo-Degussa) in 50 g Wasser und der Restmenge Mersolat® H95 (2,1 g) hergestellt. Die Hälfte der wässrigen Aktivatorlösung wird 5 Minuten nach Zusatz der Prämixlösung in das Reaktionsgefäß gegeben. Hierdurch wird die Polymerisation gestartet. Nach 2,5 Stunden Reaktionszeit wird die Reaktionstemperatur auf 40-50 °C erhöht. Nach einer weiteren Stunde wird die zweite Hälfte der wässrigen Aktivatorlösung zugesetzt. Bei Erreichen eines Polymerumsatzes > 90 % (üblicherweise: 95- 100%) wird die Polymerisation durch Zugabe einer wässrigen Lösung von 2,35 g Dihydroxylamin (DEHA, Aldrich, Artikelnummer 03620) abgestoppt. Nach dem Abstoppen der Polymerisationsreaktion werden nicht umgesetzte Monomere und flüchtige Bestandteile durch Strippen mit Wasserdampf aus dem Latex entfernt. Der Feststoffgehalt der Suspension in Wasser beträgt 18,66 Gew.-%. Zusätzlich sind 4 Gew.-% anionischer Emulgator enthalten.

Beispiel 2: Herstellung von Gasdiffusionselektroden für die Anode

100 g eines katalysatorbeschichteten Trägermaterials (40% Pt/Vulcan XC-72, Firma Cabot) werden in 405,9 g Wasser bis zur vollständigen Benetzung des Katalysators suspendiert. In diese Mischung werden 26 g 60 %ige Polytetrafluorethen-/(PTFE)-Suspension in Wasser (TF5032N, Firma Dyneon) gegeben, anschließend wird die Mischung mit 405,9 g Isopropanol versetzt und 40 Minuten mittels eines Ultrathoraxrührers UltraTurrax (IKA T-25) mit 9500 U/min gerührt. Die resultierende Suspension wird mittels eines Ink-Jet-Systems (EBS-1500, Firma EBS Ink-Jet System) mittig auf ein 50 $cm^2$ großes quadratisches Stück einer 102,9 $cm^2$ großen Polymerelektrolytmembran aus Polybenzimidazol (PBI) gedruckt. Die mit der Katalysatorschicht beschichtete Membran wird bei 120 °C im Stickstoffstrom 2 h getrocknet. Der fertige Membran-Anoden-Verbund besitzt elektrodenseitig eine Platinbelegung von 0,48 mg/$cm^2$.

**Beispiel 3**: Herstellung von Gasdiffusionselektroden für die Kathode mit Nanopartikeln

8,41 g eines katalysatorbeschichteten Trägermaterials (40% Pt/Vulcan XC-72, Firma Cabot) werden in 38,06 g Wasser bis zur vollständigen Benetzung des Katalysators suspendiert. In diese Suspension werden 0,90 g Mikrogeldispersion (0,17 g Nanopartikel in Wasser, hergestellt nach Beispiel 1) zugegeben, anschließend wird die Mischung mit 38,06 g Isopropanol versetzt und 10 min mittels eines Ultrathoraxrührers UltraTurrax (IKA T-25) mit 9500 U/min gerührt. Mit der fertigen Suspension wird mittels eines Ink-Jet-Systems (EBS-1500, Firma EBS Ink-Jet System) ein 50 $cm^2$ großes quadratisches Stück auf eine Polyesterfolie (Firma Pütz, 100 $\mu$m) gedruckt und ein 50 $cm^2$ großes quadratisches Stück einer 200 $\mu$m dicken Gasdiffusionsschicht vom Typ H2315 der Firma Freudenberg aufgelegt. Die mit der Katalysatorschicht beschichtete Gasdiffusionsschicht wird bei 120 °C im Stickstoffstrom 2 h getrocknet und die Polyesterfolie

abgezogen. Die fertige Gasdiffusionselektrode besitzt einen Mikrogelanteil von 2,0 Gew.-% sowie eine Platinbelegung von 2,19 mg/$cm^2$.

**Vergleichsbeispiel 1**: Herstellung von Gasdiffusionselektroden für die Kathode ohne Nanopartikel

8,41 g eines katalysatorbeschichteten Trägermaterials (40% Pt/Vulcan XC-72, Firma Cabot) werden in 56,84 g Wasser bis zur vollständigen Benetzung des Katalysators suspendiert. Anschließend wird die Mischung mit 55,74 g Isopropanol versetzt und 10 min mittels eines Ultrathoraxrührers UltraTurrax (IKA T-25) mit 9500 U/min gerührt. Mit der fertigen Suspension wird mittels eines Ink-Jet-Systems (EBS-1500, Firma EBS Ink-Jet System) ein 50 $cm^2$ großes quadratisches Stück auf eine Polyesterfolie (Firma Pütz, 100 μm) gedruckt und ein 50 $cm^2$ großes quadratisches Stück einer 200 μm dicken Gasdiffusionsschicht vom Typ H2315 der Firma Freudenberg aufgelegt. Die mit der Katalysatorschicht beschichtete Gasdiffusionsschicht wird bei 120 °C im Stickstoffstrom 2 h getrocknet und die Polyesterfolie abgezogen. Die fertige Gasdiffusionselektrode besitzt eine Platinbelegung von 2,16 mg/$cm^2$.

Tabelle 1 gibt einen Überblick über die Rezepturen zur Herstellung der Kathoden. Die Eigenschaften der hergestellten Gasdiffusionselektroden sind in Tabelle 2 zusammengefasst.

Die Kathode mit 2,0 Gew.-% Nanopartikelanteil weist ein homogenes Erscheinungsbild auf und bildet mit der Gasdiffusionsschicht auf einer Polyesterfolie als inertem Träger einen homogenen Verbund (vgl. Figur 2), während eine Elektrode, die ausschließlich aus Katalysator und Gasdiffusionsschicht ohne Nanopartikelzusatz auf Trägermaterial (Polyesterfolie) besteht, ein fragmentiertes Aussehen besitzt und leicht von der Gasdiffusionsschicht ablösbar ist (vgl. Figur 3).

**Beispiel 4**: Herstellung einer Membran-Elektroden-Einheit (MEE) mit einer Gasdiffusionselektrode mit Nanopartikeln aus Beispiel 3

Für die Herstellung einer MEE wird von der Gasdiffusionselektrode der Kathode nach Beispiel 3 ein 50 $cm^2$ großes quadratisches Stück mit 0,406 g Phosphorsäure (85 %) imprägniert. Ein 50 $cm^2$ großes quadratisches Stück einer 200 μm dicken Gasdiffusionsschicht vom Typ H2315 der Firma Freudenberg wird mit 0,328 g Phosphorsäure (85 %) imprägniert und elektrodenseitig auf den Anoden-Membran-Verbund (Dicke der PBI Membran 37 μm) nach Beispiel 2 mittig aufgelegt, während auf die Membranseite mit der Elektrodenseite die zuvor mit Phosphorsäure imprägnierte Gasdiffusionselektrode der Kathode mittig plaziert wird. Der gesamte Membran-Elektroden-Sandwich wird über 5 h 30 min bei 180 °C mit einer Anpresskraft von 5 kN zu einer MEE verpresst. Die so erhaltene MEE besitzt eine Dicke von 516 μm und ist in Brennstoffzellen einbaufähig.

**Vergleichsbeispiel 2**: Herstellung einer Membran-Elektroden-Einheit (MEE) mit einer Gasdiffusionselektrode ohne Nanopartikel aus Vergleichsbeispiel 1

Für die Herstellung einer MEE wird von der Gasdiffusionselektrode der Kathode nach Vergleichsbeispiel 1 ein 50 $cm^2$ großes quadratisches Stück mit 0,373 g Phosphorsäure (85 %) imprägniert. Ein 50 $cm^2$ großes quadratisches Stück einer 200 μm dicken Gasdiffusionsschicht vom Typ H2315 der Firma Freudenberg wird mit 0,348 g Phosphorsäure (85 %) imprägniert und elektrodenseitig auf den Anoden-Membran-Verbund (Dicke der PBI Membran 34 μm) nach Beispiel 2 mittig aufgelegt, während auf die Membranseite mit der Elektrodenseite die zuvor mit Phosphorsäure imprägnierte Gasdiffusionselektrode der Kathode mittig plaziert wird. Der gesamte Membran-Elektroden-Sandwich wird über 5 h 30 min bei 180 °C mit einer Anpresskraft von 5 kN zu einer MEE verpresst. Die so erhaltene MEE besitzt eine Dicke von 516 μm und ist in Brennstoffzellen einbaufähig.

**Beispiel 5**: Bestimmen der Strom-Spannungs-Charakteristik einer Brennstoffzelle mit einer nach Beispiel 4 hergestellten MEE mit Nanopartikeln in der Gasdiffusionskathode

Die nach Beispiel 4 hergestellte MEE wird in eine Testbrennstoffzelle der Firma Fuel Cell Technology, Inc. eingebaut und mit einem Anpressdruck von 15 bar verschlossen. In Figur 6 ist der Verlauf einer Strom-Spannungskurve für die Brennstoffzelle bei einer Betriebstemperatur von 160 °C aufgezeigt. Der Gasfluss für $H_2$ beträgt 783 sml/min und für Luft 2486 sml/min. Es werden unbefeuchtete Gase verwendet. Die Leistungsparameter werden an einem FCATS Advanced Screener der Firma Hydrogenics, Inc. ermittelt. Als maximale Leistung werden 0,33 W/$cm^2$ bei einer Stromdichte von 0,6 A/$cm^2$ gemessen. Die Zellimpedanz beträgt 0,22 Ω$cm^2$.

**Vergleichsbeispiel 3**: Bestimmen der Strom-Spannungs-Charakteristik einer Brennstoffzelle mit einer nach Vergleichsbeispiel 2 hergestellten MEE ohne Nanopartikel in der Gasdiffusionskathode

Die nach Vergleichsbeispiel 2 hergestellte MEE wird in eine Testbrennstoffzelle der Firma Fuel Cell Technology, Inc. eingebaut und mit einem Anpressdruck von 15 bar verschlossen. In Figur 6 ist der Verlauf einer Strom-Spannungskurve für die Brennstoffzelle bei einer Betriebstemperatur von 160 °C aufgezeigt. Der Gasfluss für $H_2$ beträgt 783 sml/min und für Luft 2486 sml/min. Es werden unbefeuchtete Gase verwendet. Die Leistungsparameter werden an einem FCATS Advanced Screener der Firma Hydrogenics, Inc. ermittelt. Als maximale Leistung werden 0,29 W/cm$^2$ bei einer Stromdichte von 0,6 A/cm$^2$ gemessen. Die Zellimpedanz beträgt 0,20 $\Omega$cm$^2$.

Verglichen mit der Gasdiffusionskathode ohne Nanopartikel gemäß Vergleichsbeispiel 3 zeigt die erfindungsgemäße Gasdiffusionselektrode gemäß Beispiel 5 stromlos eine höhere Ruhespannung sowie über den gesamten Spannungsbereich eine höhere Leistung.

**Beispiel 6**: Bestimmen der Leistung einer Brennstoffzelle im Langzeittest mit einer nach Beispiel 5 hergestellten MEE mit Nanopartikeln in der Gasdiffusionskathode bei konstanter Belastung

Die nach Beispiel 4 hergestellte MEE wird in eine Testbrennstoffzelle der Firma Fuel Cell Technology, Inc. eingebaut und mit einem Anpressdruck von 15 bar verschlossen. In Figur 7 ist der Verlauf der Spannungskurve für die Brennstoffzelle unter einer Last von 0,4 A/cm$^2$ bei einer Betriebstemperatur von 160 °C über 70 Stunden aufgezeigt. Der Gasfluss für $H_2$ beträgt 783 sml/min und für Luft 2486 sml/min. Es werden unbefeuchtete Gase verwendet. Die Leistungsparameter werden an einem FCATS Advanced Screener der Firma Hydrogenics, Inc. ermittelt. Nach 70 h bei 0,4 A/cm$^2$ ist kein Spannungsabfall zu ermitteln.

**Vergleichsbeispiel 4**: Bestimmen der Leistung einer Brennstoffzelle im Langzeittest mit einer nach Vergleichsbeispiel 2 hergestellten MEE ohne Nanopartikel in der Gasdiffusionskathode bei konstanter Belastung

Die nach Vergleichsbeispiel 2 hergestellte MEE wird in eine Testbrennstoffzelle der Firma Fuel Cell Technology, Inc. eingebaut und mit einem Anpressdruck von 15 bar verschlossen. In Figur 7 ist der Verlauf der Spannungskurve für die Brennstoffzelle unter einer Last von 0,4 A/cm$^2$ bei einer Betriebstemperatur von 160 °C über 70 Stunden aufgezeigt. Der Gasfluss für $H_2$ beträgt 783 sml/min und für Luft 2486 sml/min. Es werden unbefeuchtete Gase verwendet. Die Leistungsparameter werden an einem FCATS Advanced Screener der Firma Hydrogenics, Inc. ermittelt. Der Spannungsabfall beträgt 533 $\mu$V/h bei 0,4 A/cm$^2$.

Verglichen mit der Gasdiffusionskathode ohne Nanopartikel gemäß Vergleichsbeispiel 4 zeigt die erfindungsgemäße Gasdiffusionskathode gemäß Beispiel 6 unter einer Last von 0,4 A/cm$^2$ einen um Faktor Zehn geringeren Spannungsabfall über eine längere Betriebsdauer aufgrund des stabilisierenden Einflusses der Nanopartikel auf die Elektrodenstruktur.

**Beispiel 7**: Bestimmung der Oberflächenaktivitätsänderung des Elektrolyten durch Nanopartikel

50 g 85 gew.-% ige Phosphorsäure werden mit 2,68 g der entsprechend Beispiel 1 hergestellten Mikrogeldispersion (0,5 g Mikrogelanteil) versetzt und die Oberflächenspannung mittels der Kontaktwinkelmethode mit Wilhelmiplatte an einem K12 Tensiometer (Firma Krüss) bei Raumtemperatur zu 38 dyn/cm$^2$ bestimmt. Der Vergleichswert für reine 85 gew.-%ige Phosphorsäure liegt bei 80 dyn/cm$^2$ und belegt die Erniedrigung der Oberflächenspannung und somit die Verbesserung der benetzenden Eigenschaften durch die Anwesenheit der Mikrogelanteile in 85 gew.-%iger Phosphorsäure.

Mit dieser verringerten Oberflächenspannung von Phosphorsäure in dem Zweistoff-System aus Phosphorsäure und Mikrogeldispersion kann die verbesserte Benetzbarkeit der erfindungsgemäßen Gasdiffusionselektroden mit Phosphorsäure und die verbesserte Leistungsdichte der erfindungsgemäßen Gasdiffusionselektroden erklärt werden.

**Tabelle 1**: Rezepturen der Kathoden

| | 40 % Pt/VXC [g] | Wasser [g] | Isopropanol [g] | Mikrogel-Suspension [g] | Mikrogelmenge [g] | Mikrogelanteil [Gew.-%] |
|---|---|---|---|---|---|---|
| Beispiel 3 | 8,41 | 38,06 | 38,06 | 0,90 | 0,17 | 2,0 |
| Vergleichsbeispiel 1 | 8,41 | 56,84 | 55,74 | --- | --- | ---- |

**Tabelle 2**: Einfluß der Nanopartikel auf die Eigenschaften der Kathoden

| | Pt-Beladung [mg/ $cm^2$] | Haftung Elektrode auf GDL | Homogenität | Mikrogelanteil [Gew.-%] |
|---|---|---|---|---|
| Beispiel 3 | 2,19 | ja | ja (vgl. Figur 2) | 2,0 |
| Vergleichsbeispiel 1 | 2,16 | nein | fragmentiert (vgl. Figur 3) | ---- |

**Patentansprüche**

1. Gasdiffusionselektrode für Polymerelektrolyt-Brennstoffzellen mit einer Arbeitstemperatur bis 250 °C mit mehreren gasdurchlässigen, elektrisch leitfähigen Schichten, die mindestens eine Gasdiffusionsschicht und eine Katalysatorschicht umfassen, wobei die Katalysatorschicht ionogene Gruppen enthaltende Teilchen eines mittleren Teilchendurchmessers im Nanometerbereich enthält und wobei die ionogenen Gruppen kovalent gebundene Säuregruppen sind.

2. Gasdiffusionselektrode nach Anspruch 1, wobei die Katalysatorschicht ein elektrisch leitfähiges Trägermaterial enthält und/oder wobei wenigstens ein Teil der Partikel eines elektrisch leitfähigen Trägermaterials der Katalysatorschicht einen Elektrokatalysator enthält.

3. Gasdiffusionselektrode nach Anspruch 2, wobei der Elektrokatalysator aus der Gruppe von Metallen und Metalllegierungen ausgewählt ist.

4. Gasdiffusionselektrode nach einem der Ansprüche 1 bis 3, wobei die Gasdiffusionsschicht aus Kohlenstoff besteht.

5. Gasdiffusionselektrode nach einem der Ansprüche 1 bis 4, wobei mindestens eine Katalysatorschicht ionogene Gruppen enthaltende Teilchen in Mengen von 0,2 bis 50 Gew.-% bezogen auf die Gesamtmasse des elektrisch leitfähigen Trägermaterials und des Elektrokatalysators, enthält.

6. Gasdiffusionselektrode nach einem der Ansprüche 1 bis 5, wobei die ionogene Gruppen enthaltenden Teilchen hauptsächlich aus einem oder mehreren organischen Polymer(en) und/oder Oligomer(en) aufgebaut sind.

7. Gasdiffusionselektrode nach einem der Ansprüche 1 bis 6, wobei die ionogene Gruppen enthaltenden Teilchen an der Oberfläche oder in dem gesamten Teilchen ionogene Gruppen aufweisen.

8. Gasdiffusionselektrode nach einem der Ansprüche 1 bis 7, wobei die ionogene Gruppen enthaltenden Teilchen einen mittleren Teilchendurchmesser in einem Bereich von 5 nm bis 500 nm aufweisen.

9. Gasdiffusionselektrode nach einem der Ansprüche 1 bis 8, wobei die ionogene Gruppen enthaltenden Teilchen durch Emulsionspolymerisation hergestellt werden.

10. Verfahren zur Herstellung einer Gasdiffusionselektrode für Polymerelektrolyt-Brennstoffzellen nach einem der Ansprüche 1 bis 9, umfassend die folgenden Schritte:

    A) Herstellen einer Suspension aus mindestens einem partikulären, elektrisch leitfähigen Trägermaterial für die Katalysatorschicht, bei dem wenigstens ein Teil der Partikel einen Elektrokatalysator trägt, und aus den ionogene Gruppen enthaltenden Teilchen mit einem mittleren Teilchendurchmesser im Nanometerbereich in einem geeigneten Lösungsmittel,
    B) Ausformen der Suspension in eine Elektrodenform auf einer Unterlage,
    C) Trocknen der Elektrodenform aus Schritt B) auf der Unterlage und
    D) Überführen der Elektrodenform aus Schritt C) in eine Membran-Elektroden-Einheit.

11. Verfahren nach Anspruch 10, wobei das partikuläre, elektrisch leitfähige Trägermaterial für die Katalysatorschicht, welches wenigstens teilweise mit dem Elektrokatalysator beladen ist, als Pulver bereitgestellt wird.

12. Verfahren nach Anspruch 10 oder 11, wobei das partikuläre, elektrisch leitfähige Trägermaterial für die Katalysatorschicht als Suspension oder Paste bereitgestellt wird und/oder das Ausformen der Katalysatorschicht in die Elektrodenform durch Aufbringen der Suspension oder der Paste auf wenigstens eine Unterlage und durch nachfolgendes Trocknen erfolgt.

13. Polymerelektrolyt-Brennstoffzelle für den Betrieb bei Temperaturen bis 250 °C mit Gasdiffusionselektroden mit mehreren gasdurchlässigen, elektrisch leitfähigen Schichten, die mindestens eine Gasdiffusionsschicht und eine Katalysatorschicht umfassen, wobei die Katalysatorschicht ionogene Gruppen enthaltende Teilchen eines mittleren Teilchendurchmessers im Nanometerbereich enthält und wobei die ionogenen Gruppen kovalent gebundene Säuregruppen sind.

14. Polymerelektrolyt-Brennstoffzelle mit einer Arbeitstemperatur bis 250 °C nach Anspruch 13, enthaltend ein Dotierungsmittel und ein basisches Polymer aus der Gruppe, umfassend Polybenzimidazol, Polypyridin, Polypyrimidin, Polyimidazol, Polybenzthiazol, Polybenzoxazol, Polyoxadiazol, Polychinoxalin, Polythiadiazol, Poly(tetrazapyren) oder eine Kombination von zwei oder mehreren davon, ausgewählt wird.

15. Polymerelektrolyt-Brennstoffzelle nach Anspruch 14, wobei das Dotierungsmittel aus der Gruppe, umfassend Phosphorsäure, Phosphorsäurederivate, Phosphonsäure, Phosphonsäurederivate, Schwefelsäure, Schwefelsäurederivate, Sulfonsäure, Sulfonsäurederivate oder eine Kombination von zwei oder mehreren davon, ausgewählt ist.

16. Verwendung einer Gasdiffusionselektrode nach einem der Ansprüche 1 bis 9 in Polymerelektrolyt-Brennstoffzellen mit einer Arbeitstemperatur bis 250 °C.

## Claims

1. A gas diffusion electrode for polymer electrolyte fuel cells having an operating temperature up to 250 °C, said electrode comprising a plurality of gas permeable electrically conductive layers which have at least one gas diffusion layer and at least one catalyst layer, wherein the catalyst layer contains ionogenic-group-containing particles having a mean particle diameter in the nanometre range, and wherein the ionogenic groups are covalently bonded acid groups.

2. The gas diffusion electrode according to claim 1, wherein the catalyst layer contains an electrically conductive carrier material, and/or wherein at least some of the particles of an electrically conductive carrier material of the catalyst layer contain an electrocatalyst.

3. The gas diffusion electrode according to claim 2, wherein the electrocatalyst is selected from the group of metals and metal alloys.

4. The gas diffusion electrode according to any one of claims 1 to 3, wherein the gas diffusion layer consists of carbon.

5. The gas diffusion electrode according to any one of claims 1 to 4, wherein at least one catalyst layer contains ionogenic-group-containing particles in amounts of 0.2 to 50 % by weight based on the total mass of the electrically conductive carrier material and of the electrocatalyst.

6. The gas diffusion electrode according to any one of claims 1 to 5, wherein the ionogenic-group-containing particles are formed primarily of one or more organic polymer(s) and/or oligomer(s).

7. The gas diffusion electrode according to any one of claims 1 to 6, wherein the ionogenic-group-containing particles comprise ionogenic groups on the surface or within the entire particle.

8. The gas diffusion electrode according to any one of claims 1 to 7, wherein the ionogenic-group-containing particles have a mean particle diameter in a range of 5 nm to 500 nm.

9. The gas diffusion electrode according to any one of claims 1 to 8, wherein the ionogenic-group-containing particles are produced by emulsion polymerisation.

10. A method for producing a gas diffusion electrode of polymer electrolyte fuel cells according to any one of claims 1

to 9, said method comprising the following steps:

A) producing a suspension formed of at least one particulate, electrically conductive carrier material for the catalyst layer, in which at least some of the particles carry an electrocatalyst, and of the ionogenic-group-containing particles having a mean particle diameter in the nanometre range in a suitable solvent,
B) forming the suspension in an electrode mould on a substrate,
C) drying the electrode mould from step (B) on the substrate, and
D) transferring the electrode mould from step (C) into a membrane-electrode unit.

**11.** The method according to claim 10, wherein the particulate, electrically conductive carrier material for the catalyst layer, which carrier material is charged at least in part with the electrocatalyst, is provided as a powder.

**12.** The method according to either claim 10 or claim 11, wherein the particulate, electrically conductive carrier material for the catalyst layer is provided as a suspension or paste and/or the catalyst layer is formed in the electrode mould by applying the suspension or paste on at least one substrate and by subsequent drying.

**13.** A polymer electrolyte fuel cell for operation at temperatures up to 250 °C, comprising gas diffusion electrodes having a plurality of gas permeable, electrically conductive layers which have at least one gas diffusion layer and at least one catalyst layer, wherein the catalyst layer contains ionogenic-group-containing particles having a mean particle diameter in the nanometre range, and wherein the ionogenic groups are covalently bonded acid groups.

**14.** The polymer electrolyte fuel cell having an operating temperature up to 250 °C according to claim 13, containing a doping agent and a basic polymer selected from the group comprising polybenzimidazole, polypyridine, polypyrimidine, polyimidazole, polybenzthiazole, polybenzoxazole, polyoxadiazole, polyquinoxaline, polythiadiazole, poly (tetrazapyrene), or a combination of two or more thereof.

**15.** The polymer electrolyte fuel cell according to claim 14, wherein the doping agent is selected from the group comprising phosphoric acid, phosphoric acid derivatives, phosphonic acid, phosphonic acid derivatives, sulphuric acid, sulphuric acid derivatives, sulphonic acid, sulphonic acid derivatives, or a combination of two or more thereof.

**16.** A use of a gas diffusion electrode according to any one of claims 1 to 9 in polymer electrolyte fuel cells having an operating temperature up to 250 °C.

## Revendications

**1.** Electrode de diffusion de gaz pour piles à combustible à électrolyte polymère avec une température de travail allant jusqu'à 250°C avec plusieurs couches électriquement conductrices, perméables au gaz, qui comprennent au moins une couche de diffusion de gaz et une couche de catalyseur, dans laquelle la couche de catalyseur contient des particules contenant des groupes ionogènes d'un diamètre de particule moyen de l'ordre du nanomètre et dans laquelle les groupes ionogènes sont des groupes d'acides liés de manière covalente.

**2.** Electrode de diffusion de gaz selon la revendication 1, dans laquelle la couche de catalyseur contient un matériau porteur électriquement conducteur et/ou dans laquelle au moins une partie des particules d'un matériau porteur électriquement conducteur de la couche de catalyseur contient un catalyseur à électrolyte.

**3.** Electrode de diffusion de gaz selon la revendication 2, dans laquelle le catalyseur à électrolyte est sélectionné dans le groupe des métaux et des alliages de métaux.

**4.** Electrode de diffusion de gaz selon une des revendications 1 à 3, dans laquelle la couche de diffusion de gaz est constituée de carbone.

**5.** Electrode de diffusion de gaz selon une des revendications 1 à 4, dans laquelle au moins une couche de catalyseur contient des particules contenant des groupes ionogènes dans des quantités de 0,2 à 50% en poids rapporté à la masse totale du matériau porteur électriquement conducteur et du catalyseur à électrolyte.

**6.** Electrode de diffusion de gaz selon une des revendications 1 à 5, dans laquelle les particules contenant des groupes ionogènes sont principalement constituées d'un ou plusieurs polymère(s) organique(s) et/ou oligomère(s).

**7.** Electrode de diffusion de gaz selon une des revendications 1 à 6, dans laquelle les particules contenant des groupes ionogènes présentent sur la surface ou dans la totalité des particules des groupes ionogènes.

**8.** Electrode de diffusion de gaz selon une des revendications 1 à 7, dans laquelle les particules contenant des groupes ionogènes présentent un diamètre de particule moyen dans une plage de 5 nm à 500 nm.

**9.** Electrode de diffusion de gaz selon une des revendications 1 à 8, dans laquelle les particules contenant des groupes ionogènes sont produites par polymérisation avec émulsion.

**10.** Procédé de production d'une électrode de diffusion de gaz pour piles à combustible à électrolyte polymère selon une des revendications 1 à 9, comprenant les étapes suivantes :

A) produire une suspension composée d'au moins un matériau porteur électriquement conducteur, particulaire pour la couche de catalyseur, dans lequel au moins une partie des particules supporte un catalyseur à électrolyte, et des particules contenant des groupes ionogènes de l'ordre du nanomètre dans un solvant approprié,
B) façonner la suspension en une forme d'électrode sur un substrat,
C) sécher la forme d'électrode de l'étape B) sur le substrat et
D) faire passer la forme d'électrode de l'étape C) dans une unité membrane/électrode.

**11.** Procédé selon la revendication 10, dans lequel le matériau porteur électriquement conducteur, particulaire est fourni sous forme de poudre pour la couche de catalyseur, qui est chargée au moins partiellement avec le catalyseur à électrolyte.

**12.** Procédé selon la revendication 10 ou 11, dans lequel le matériau porteur électriquement conducteur, particulaire pour la couche de catalyseur est fourni sous forme de suspension ou de pâte et/ou le façonnage de la couche de catalyseur en la forme d'électrode a lieu en appliquant la suspension ou la pâte sur au moins un substrat et par séchage subséquent.

**13.** Pile à combustible à électrolyte polymère pour exploitation à des températures allant jusqu'à 250°C comportant des électrodes de diffusion de gaz avec plusieurs couches électriquement conductrices, perméables au gaz, qui comprennent au moins une couche de diffusion de gaz et une couche de catalyseur, dans laquelle la couche de catalyseur contient des particules contenant des groupes ionogènes d'un diamètre de particule moyen de l'ordre du nanomètre et dans lequel les groupes ionogènes sont des groupes d'acides liés de manière covalente.

**14.** Pile à combustible à électrolyte polymère avec une température de travail allant jusqu'à 250°C selon la revendication 13, contenant un dopant et un polymère basique sélectionné dans le groupe, comprenant le polybenzimidazole, polypyridine, polypyrimidine, polyimidazole, polybenzthiazole, polybenzoxazole, polyoxadiazole, polychinoxaline, polythiadiazole, poly(tetrazapyrène) ou une combinaison de deux ou plusieurs de ceux-ci.

**15.** Pile à combustible à électrolyte polymère selon la revendication 14, dans lequel le dopant est sélectionné dans le groupe comprenant l'acide phosphorique, des dérivés d'acide phosphorique, l'acide phosphonique, des dérivés d'acide phosphonique, l'acide sulfurique, des dérivés d'acide sulfurique, l'acide sulfonique, des dérivés d'acide sulfonique ou une combinaison de deux ou plusieurs de ceux-ci.

**16.** Utilisation d'une électrode de diffusion de gaz selon une des revendications 1 à 9 dans des piles à combustion à électrolyte polymère avec une température de travail allant jusqu'à 250°C.

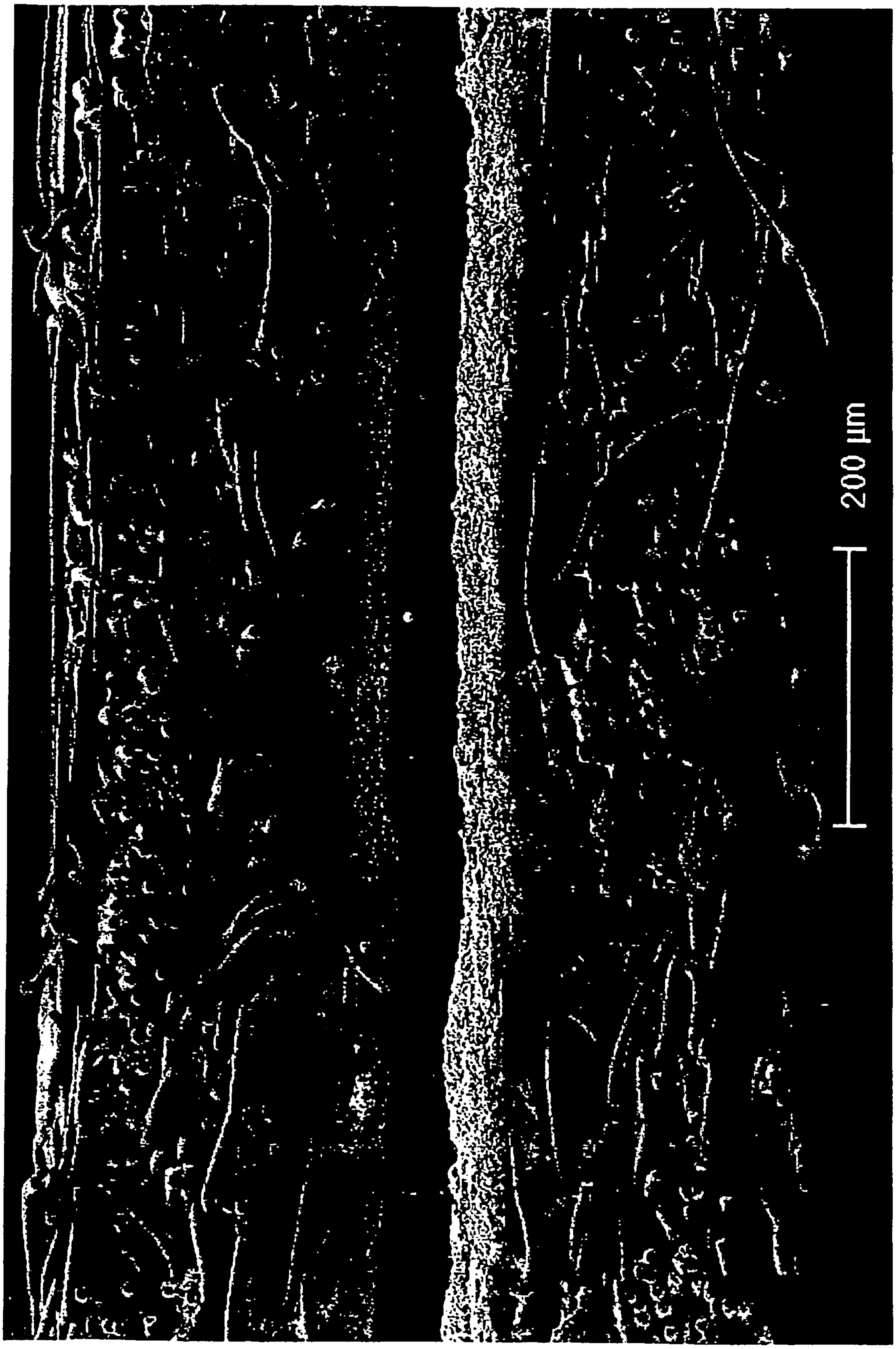


Figur 1

Figur 2

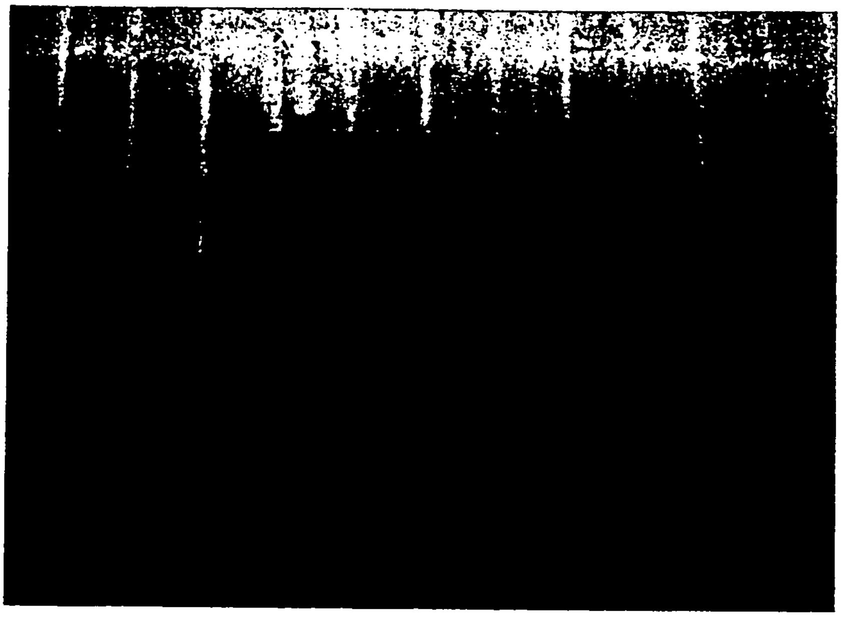

Figur 3

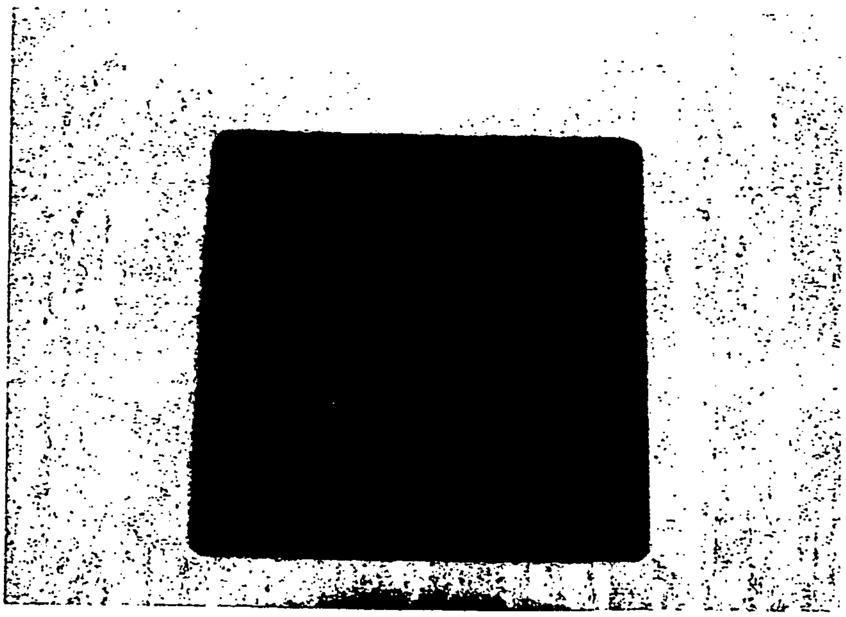

Figur 4

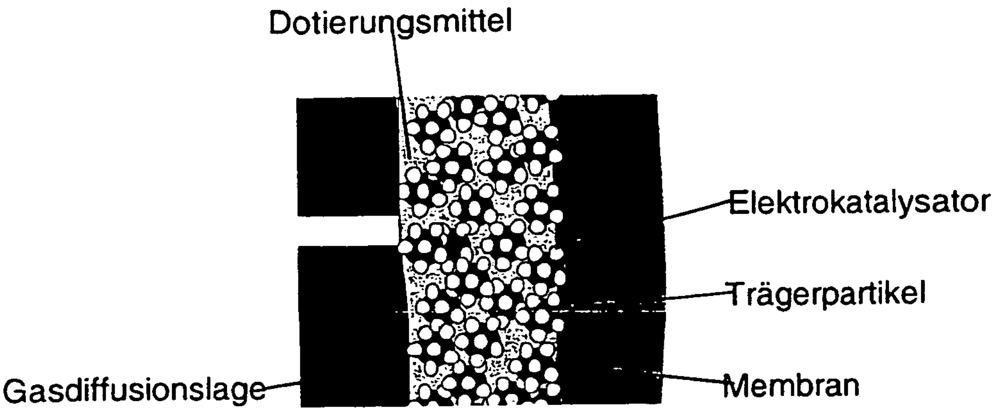


Figur 5

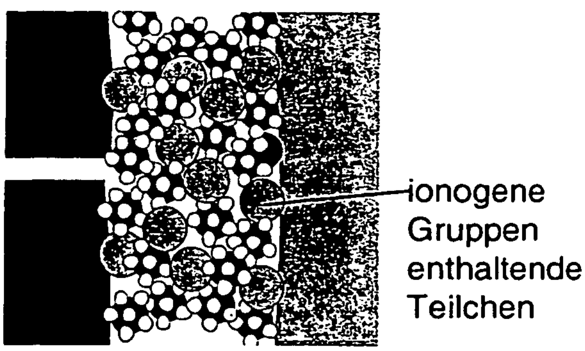

Figur 6

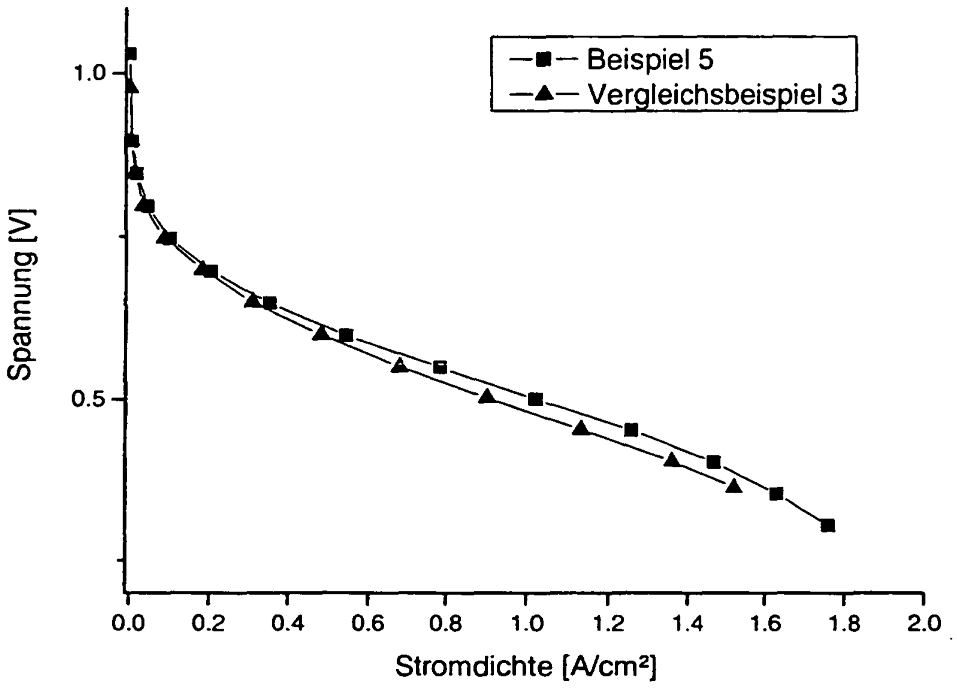


Figur 7

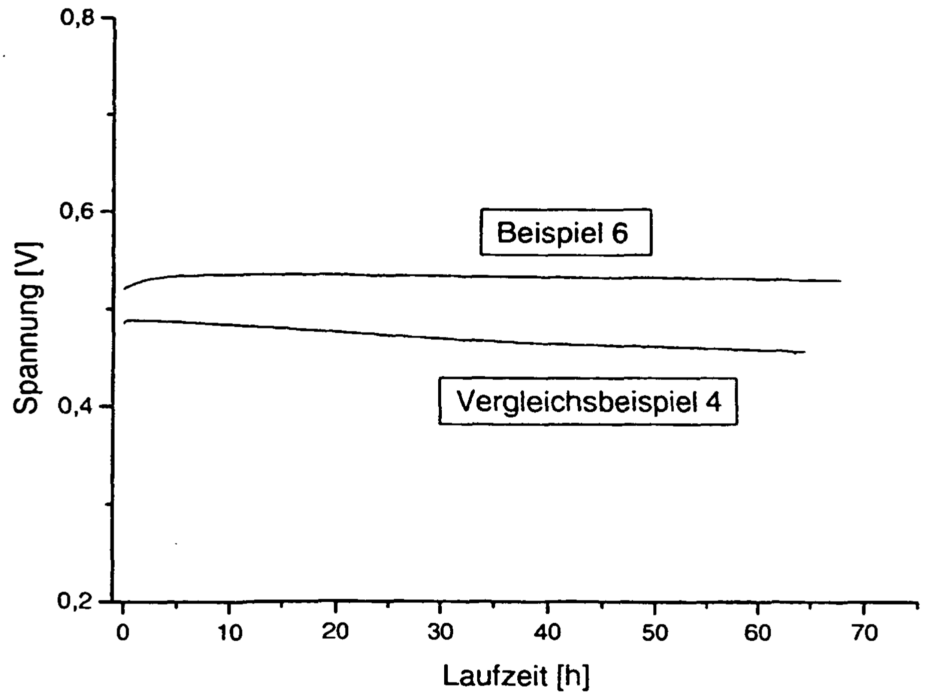

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4876115 A
- JP 6084797 A
- US 5525436 A
- WO 0118894 A2
- WO 2006005466 A1
- US 20070166600 A1
- US 2187146 A
- US 5302696 A
- US 5442009 A
- DE 102007011424


### In der Beschreibung aufgeführte Nicht-Patentliteratur


- Römpp Lexikon der Chemie. 1997, vol. 2
- **P. A. LOVELL ; M. S. EL-AASSER.** Emulsion Polymerization and Emulsion Polymers. John Wiley & Sons
- **H. GERRENS.** *Fortschr. Hochpolym. Forsch.,* 1959, vol. 1, 234
- **VOLLMERT.** Polymer Chemistry. Springer Verlag, 1973
- **H. G. MÜLLER.** *Colloid Polymer Science,* 1996, vol. 267, 1113-1116
- **W. SCHOLTAN ; H. LANGE.** *Kolloid-Z u. Z. Polymere,* 1972, vol. 250, 782
- **HOUBEN-WEYL.** Methoden der organischen Chemie. vol. 14/2, 848